# EUROPEAN PATENT SPECIFICATION

(11) **EP 2 573 449 B1**
(45) Date of publication and mention of the grant of the patent: **24.06.2020**
(21) Application number: 11795325.7
(22) Date of filing: 13.04.2011
(51) Int. Cl.: F17C 9/02, F16L 55/04, F28D 21/00, F28F 9/02, F25B 39/02, F28D 3/04, F28D 7/00, F28D 3/02, F28F 27/02

(54) **VAPORIZER FOR LOW-TEMPERATURE LIQUEFIED GAS**
VERDAMPFER FÜR BEI NIEDRIGER TEMPERATUR VERFLÜSSIGTES GAS
VAPORISATEUR POUR GAZ LIQUÉFIÉ BASSE-TEMPÉRATURE

(30) Priority: 18.06.2010 JP 2010139208
(43) Date of publication of application: 27.03.2013
(60) Divisional application: 17167335.3
(73) Proprietor: Kabushiki Kaisha Kobe Seiko Sho, Kobe-shi, Hyogo 651-8585 (JP)
(72) Inventor: ARIHARA, Hirotoshi, Hyogo 651-2271 (JP); UEDA, Hiroki, Hyogo 651-2271 (JP); IMANISHI, Etsujiro, Hyogo 651-2271 (JP); NISHIMURA, Makoto, Hyogo 651-2271 (JP)
(74) Representative: TBK
(86) International application number: PCT/JP2011/002183
(87) International publication number: WO 2011/158417

(56) References cited:
- JP-A- 3 092 694
- JP-A- 8 176 563
- JP-A- S6 262 094
- JP-A- 62 062 094
- JP-A- H06 101 794
- JP-A- H06 323 783
- JP-A- 2009 052 724
- JP-A- 2009 052 724
- JP-A- 2010 038 330
- JP-A- 2010 038 330
- JP-B- 51 014 120

## Description

### Technical Field

The present invention relates to a vaporizer for vaporizing a low-temperature liquefied gas such as liquefied natural gas (LNG), liquefied petroleum gas (LPG) or liquid nitrogen (LN₂) by exchanging heat with a heat transfer medium such as seawater.

### Background Art

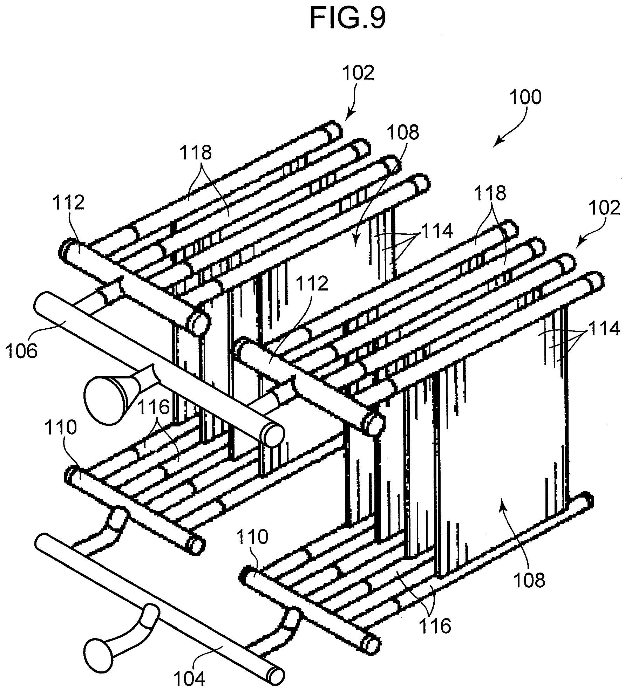

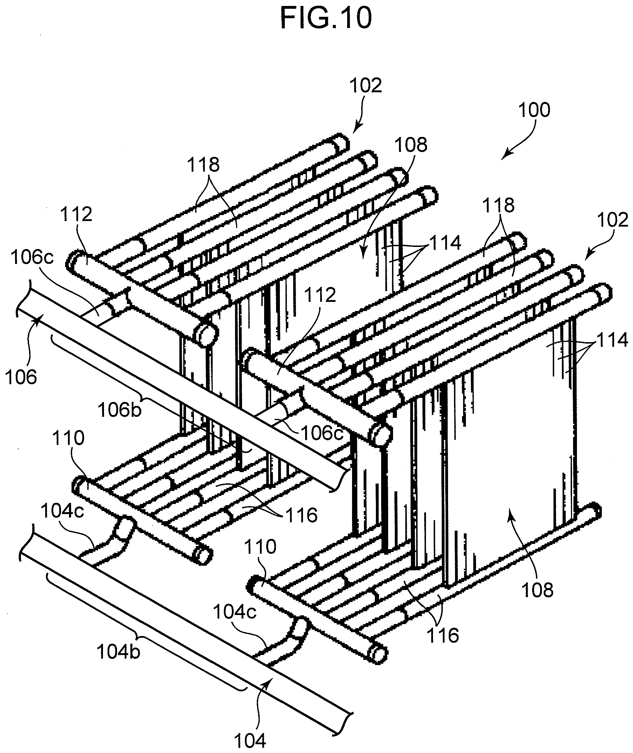

A vaporizer described in document JPH05164482 is known in the prior art as an example of an open rack vaporizer (ORV) that vaporizes liquefied natural gas (LNG) by exchanging heat with seawater. As shown in Fig. 9, this vaporizer is provided with a plurality of vaporizing tube blocks 102, a dispensing tube 104 that dispenses a low-temperature liquefied gas to each of the vaporizing tube blocks 102, and a collecting tube 106 that collects liquefied gas that has vaporized in each of the vaporizing tube blocks 102. Here, the dispensing tube 104 refers to a site where the vaporizing tube blocks 102 are connected to each other in a piping that supplies LNG sent from a supply pump to each of the vaporizing tube blocks 102. For example, in a vaporizer 100 shown in Fig. 9, the dispensing tube 104 is a site extending from a location where it branches from a main tube (not shown) to each of the vaporizing tube blocks 102. In addition, in the vaporizer 100 shown in Fig. 10, the dispensing tube is composed of connecting tubes 104c connected from the main tube to each of the vaporizing tube blocks 102, and a site of main tube (portion of the main tube) 104b that communicates the connecting tubes 104c. In addition, the collecting tube 106 refers to a site that communicates the vaporizing tube blocks 102 to each other in a piping that sends out low-temperature liquefied gas vaporized in each of the vaporizing tube blocks 102 to a consumption site and the like. For example, in the vaporizer 100 shown in Fig. 9, the collecting tube 106 is a site extending from the location of merging of each of the vaporizing tube blocks 102 to the main tube. In addition, in the vaporizer 100 shown in Fig. 10, the collecting tube is composed of connecting tubes 106c connected from each of the vaporizing tube blocks 102 to the main tube, and a site of the main tube (portion of the main tube) 106b that communicates the connecting tubes 106c.

Returning to Fig. 9, each of the vaporizing tube blocks 102 has a plurality of vaporizing tube panels 108, supply side manifolds 110 that dispense low-temperature liquefied gas from the dispensing tube 104 to each of the vaporizing tube panels 108, and delivery side manifolds 112 that collect liquefied gas vaporized in each of the vaporizing tube panels 108 and send it out to the collecting tube 106. The plurality of vaporizing tube panels 108 are arranged in a direction perpendicular to the panel surfaces in a mutually parallel alignment. Each of the supply side manifolds 110 is respectively connected to the dispensing tube 104, and each of the delivery side manifolds 112 is respectively connected to the collecting tube 106.

The vaporizing tube panels 108 have a plurality of vaporizing tubes (heat transfer tubes) 114 arranged in a specific vertical plane in a mutually parallel alignment, supply side headers 116 that dispense low-temperature liquefied gas from the supply side manifolds 110 to each of the vaporizing tubes 114, and delivery side headers 118 that collect liquefied gas vaporized in each of the vaporizing tubes 114 and send it out to the delivery side manifolds 112. The supply side headers 116 are connected to the lower end of each of the vaporizing tubes 114 contained in a common vaporizing panel 108 and to the supply side manifolds 110. The delivery side headers 118 are connected to the upper end of each of the vaporizing tubes 114 contained in a common vaporizing tube panel 108 and to the delivery side manifolds 112.

In this type of vaporizer 100, low-temperature liquefied gas is vaporized by heat exchange between low-temperature liquefied gas flowing through the vaporizing tubes 114 and seawater flowing down over the surface of each of the vaporizing tube panels 108. More specifically, low-temperature liquefied gas supplied to the dispensing tube 104 is dispensed to each of the vaporizing tube blocks 102 by the dispensing tube 104, and is supplied from the lower end of each of the vaporizing tubes 114 into the vaporizing tubes 114 by passing through the supply side manifolds 110 and the supply side headers 116. This low-temperature liquefied gas flows through the vaporizing tubes 114 from the lower end to the upper end of the vaporizing tubes 114. At that time, the low-temperature liquefied gas is vaporized by exchanging, by means of those tube walls, heat with seawater that has flown down along the outer peripheral surfaces of the tube walls of the vaporizing tubes 114. Liquefied gas that has been vaporized in each of the vaporizing tubes 114 is collected in the collecting tube 106 after passing through the delivery side headers 118 and the delivery side manifolds 112, after which it is sent out to consumption sites and the like by passing through a piping system (not shown) connected to the collecting tube 106.

In the above-mentioned vaporizer 100, there are cases in which vibrations occur in the vaporizer 100 and the piping system connected to the vaporizer 100 depending on operating conditions such as the pressure within each of the vaporizing tubes 114 or the flow rate or temperature of the low-temperature liquefied gas flowing the vaporizing tubes 114. These vibrations generate high stress and cause metal fatigue and the like to accumulate in each site that composes the vaporizer 100, thereby having the risk of causing damage or malfunctions.

In order to suppress these vibrations, it is effective to enhance overall rigidity of the vaporizing tube blocks 102 and each of the vaporizing tube panels 108 by enhancing the connecting strength of each of the members within the vaporizing tube blocks 102 and each of the vaporizing tube panels 108. In this case, however, problems occur due to an increase in thermal stress. More specifically, in this vaporizer 100, there is a considerable temperature difference between when low-temperature liquefied gas (at roughly minus one hundred and several tens of degrees) flows through each of the tubes (during operation), and when the vaporizer is at normal temperature overall in the state in which the gas is not flowing through the tubes (during stoppage). Consequently, each member undergoes violent expansion and contraction due to this temperature difference, and if each constituent member is firmly anchored, excessive thermal stress is generated attributable to this expansion and contraction, thereby resulting in the risk of inducing damage or malfunctions.

A vaporizer as specified in the preamble of claims 1, 3, 5, 8 and 9 is known from document JPH06323783.

Document JPS6262094 discloses a vaporizer for low-termperature liquefied gas comprising tube blocks.

### Summary of the Invention

An object of the present invention is to provide a vaporizer for low-temperature liquefied gas capable of effectively suppressing the propagation of vibrations generated in each of the vaporizing tubes thereof caused by vaporization of low-temperature liquefied gas without causing an accompanying increase in thermal stress.

Therefore, as a result of conducting extensive studies on the mechanism of occurrence of the above-mentioned vibrations in order to solve the above-mentioned problems, the inventors of the present invention found that a thermohydraulic destabilizing phenomenon occurs during the course of vaporization of low-temperature liquefied gas, and that there are cases in which this causes the generation of vibrations in the vaporizer and the like. Namely, it was surmised that, when a thermohydraulic destabilizing phenomenon occurs during the course of vaporization of a low-temperature liquefied gas, pressure pulsation occurs as a result thereof, this pressure pulsation is amplified by propagation using a fluid as a medium, and there are cases in which this pulsation acts as an exciting force on the vaporizer and piping system, thereby resulting in the generation of large vibrations throughout the entire vaporizer and the like.

With the foregoing in view, the present invention provides a vaporizer having the features set forth in any one of the independent claims 1, 3, 5, 8 and 9. Furthermore, in the present invention, the inter-block dispensing tube is a site that communicates the vaporizing tube blocks in a piping through which low-temperature liquefied gas is supplied from a supply source. For example, in the case low-temperature liquefied gas is supplied to each of the vaporizing tube blocks by being branched from a main tube, the inter-block dispensing tube is a site extending from the location of branching from the main tube to each of the vaporizing tube blocks. In addition, in the case low-temperature liquefied gas is supplied directly from a main tube to each of the vaporizing tube blocks, the inter-block dispensing tube is composed of connecting tubes connected to each of the vaporizing tube blocks by being branched from the main tube and the site of the main tube that communicates these connecting tubes to each other. In addition, the inter-block collecting tube is a site that communicates the vaporizing tube blocks to each other in a piping that sends out the low-temperature liquefied gas vaporized in each of the vaporizing tube blocks to a consumption site and the like. For example, in the case vaporized low-temperature liquefied gas is collected from each of the vaporizing tube blocks and sent out to a main tube, the inter-block collecting tube is a site extending from the location of branching from the main tube to each of the vaporizing tube blocks. In addition, in the case low-temperature liquefied gas is send out directly from each of the vaporizing tube blocks to the main tube, the inter-block collecting tube is composed of connecting tubes connected to the main tube from each of the vaporizing tube blocks and a site of the main tube that communicates these connecting tubes.

### Brief Description of the Drawings

Fig. 1 is a schematic drawing (front view) showing the state of piping of a vaporizer according to a first embodiment.
Fig. 2 is a schematic drawing (side view) showing the state of piping of the vaporizer.
Fig. 3A is a side view for explaining a seawater supply unit of the vaporizer, and Fig. 3B is a front view for explaining a seawater supply unit of the vaporizer.
Fig. 4 is a block diagram of a vaporizer according to a second embodiment.
Figs. 5A and 5B are block diagrams for explaining a vaporizer according to another embodiment.
Fig. 6A is a block diagram of a vaporizer according to a third embodiment, and Fig. 6B is a block diagram for explaining a vaporizer according to another embodiment.
Figs. 7A and 7B are block diagrams for explaining a vaporizer according to another embodiment.
Fig. 8 is a block diagram of a vaporizer according to a fourth embodiment.
Fig. 9 is a perspective view showing the general configuration of a vaporizer of the prior art.
Fig. 10 is a perspective view for explaining a dispensing tube and a collecting tube of the prior art.

### Embodiments for Carrying Out the Invention

The following provides an explanation of a first embodiment of the present invention with reference to the appended drawings.

A vaporizer for low-temperature liquefied gas according to the present embodiment (to also be simply referred to as a "vaporizer") is a so-called open rack vaporizer (ORV) that vaporizes low-temperature liquefied gas by exchanging heat between the supplied low-temperature liquefied gas and external seawater. In the present embodiment, liquefied natural gas (LNG) is used for the low-temperature liquefied gas.

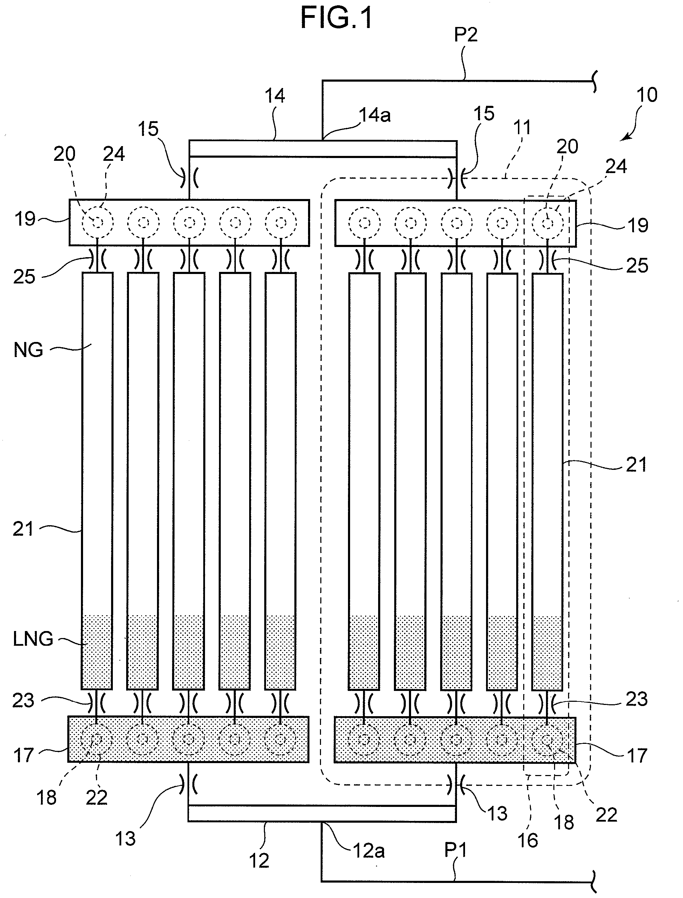

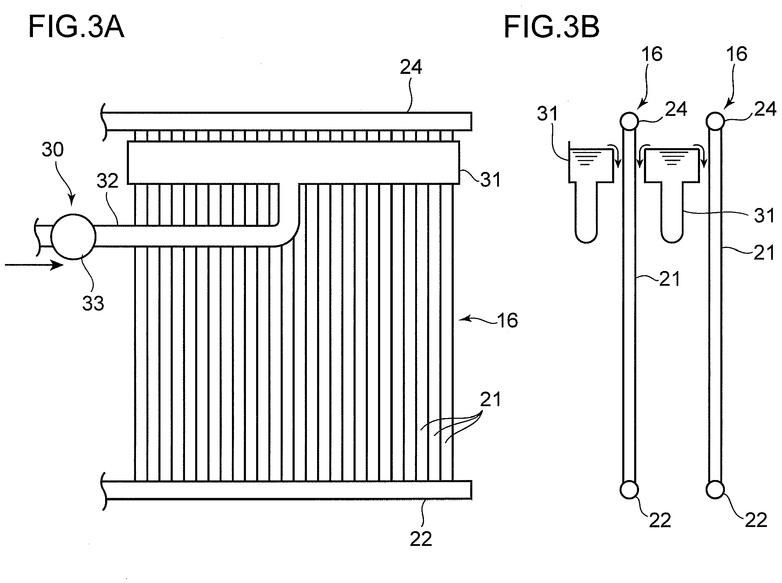

More specifically, as shown in Figs. 1 to 3B, the vaporizer is provided with a plurality (two in the present embodiment) of vaporizing tube blocks 11, a dispensing tube (inter-block dispensing tube) 12 that dispenses LNG to each of the vaporizing tube blocks 11, supply side inter-block diaphragms 13, a collecting tube (inter-block collecting tube) 14 that collects natural gas (NG) in the form of vaporized LNG that has been vaporized in each of the vaporizing tube blocks 11, delivery side inter-block diaphragms 15, and a seawater supply unit 30 that supplies seawater so as to allow the seawater to flow down along the surfaces of each of the vaporizing tube panels 16.

Each of the vaporizing tube blocks 11 respectively has a plurality (five in the present embodiment) of vaporizing tube panels 16, a supply side manifold (inter-panel dispensing tube) 17 that dispenses LNG from the dispensing tube 12 to each of the vaporizing tube panels 16, supply side inter-panel diaphragms 18, a delivery side manifold (inter-panel dispensing tube) 19 that collects LNG vaporized in each of the vaporizing tube panels 16 (namely, NG) and sends it out to the a collecting tube 14, and delivery side inter-panel diaphragms 20. The surface of each of the vaporizing tube blocks 11 composed in this manner is spray coated to prevent corrosion caused by contact with seawater. Furthermore, the number of vaporizing tube panels 16 contained in a single vaporizing tube block 11 is not limited to five, but rather may also be another number.

Each of the vaporizing tube panels 16 respectively has a plurality (90 in the present embodiment) of vaporizing tubes (heat transfer tubes) 21 arranged in a vertical plane in a mutually parallel alignment, a supply side header 22 that dispenses LNG from the supply side manifold 17 to each of the vaporizing tubes 21, a plurality of supply side inter-vaporizing tube diaphragms 23 respectively connected to the ends of each of the vaporizing tubes 21 on the side of the supply side header 22, a delivery side header 24 that collects LNG vaporized in each of the vaporizing tubes 21 and sends it out to the delivery side manifold 19, and a plurality of delivery side inter-vaporizing tube diaphragms 25 respectively connected to the ends of each of the vaporizing tubes 21 on the side of the delivery side header 24. Furthermore, the number of vaporizing tubes contained in a single vaporizing tube panel 16 is not limited to 90, but rather may also be another number.

Each of the vaporizing tubes 21 is formed from a metal material having high thermal conductivity such as aluminum or aluminum alloy, and extends in the vertical direction.

The supply side header 22 is a tube that extends in the horizontal direction along the above-mentioned vertical plane in which the vaporizing tubes 21 are arranged. This supply side header 22 connects the lower end of each vaporizing tube 21 contained in a common vaporizing tube panel 16 with the supply side manifold 17. The supply side inter-vaporizing tube diaphragms (inter-vaporizing tube pulsation suppression units provided on the LNG supply side with respect to the vaporizing tubes 21) 23 are respectively provided at each connection of the supply side header 22 to the vaporizing tubes 21.

The supply side inter-vaporizing tube diaphragms 23 suppress the propagation of pressure pulsation between the vaporizing tubes 21 on the supply side of LNG with respect to the vaporizing tubes 21 (namely, the upstream side of the flow of LNG in the vaporizer 10). More specifically, the inside of each vaporizing tube 21 is communicated with the inside of the supply side header 22 via each of the supply side inter-vaporizing tube diaphragms 23. Each of the supply side inter-vaporizing tube diaphragms 23 suppresses the mutual propagation of pressure pulsation between the vaporizing tubes 21 that propagates through the LNG in the tubes. The supply side inter-vaporizing tube diaphragms 23 locally reduce the cross-sectional area of the flow path of LNG in the supply side header 22 and the vaporizing tubes 21 (to also be simply referred to as the "flow path cross-sectional area"). As a result of this local reduction in flow path cross-sectional area, pressure pulsation that passes through the supply side inter-vaporizing tube diaphragms 23 decreases due to attenuation effects based on a pressure loss of the LNG when passing through the supply side inter-vaporizing tube diaphragms 23. The supply side inter-vaporizing tube diaphragms 23 of the present embodiment are orifices.

The delivery side header 24 is a tube that extends parallel to the supply side header 22. This delivery side header 24 connects the upper end of each of the vaporizing tubes 21 contained in a common vaporizing tube panel 16 with the delivery side manifold 19. The delivery side inter-vaporizing tube diaphragms (inter-vaporizing tube pulsation suppression units provided on the delivery side of NG (vaporized LNG) with respect to the vaporizing tubes 21) 25 are respectively provided at each connection of the delivery side header 24 to the vaporizing tubes 21. The delivery side inter-vaporizing tube diaphragms 25 suppress the propagation of pressure pulsation between the vaporizing tubes 21 on the delivery side of LNG with respect to the vaporizing tubes 21 (namely, the downstream side of the flow of NG in the vaporizer 10). More specifically, the inside of each vaporizing tube 21 is communicated with the inside of the delivery side header 24 via each of the delivery side inter-vaporizing tube diaphragms 25. Each of the delivery side inter-vaporizing tube diaphragms 25 suppresses the mutual propagation of pressure pulsation between the vaporizing tubes 21 that propagates through the NG in the tubes. The delivery side inter-vaporizing tube diaphragms 25 locally reduce the flow path cross-sectional area of NG in the delivery side header 24 and the vaporizing tubes 21. As a result of this local reduction in flow path cross-sectional area, pressure pulsation that passes through the delivery side inter-vaporizing tube diaphragms 25 decreases due to attenuation effects based on a pressure loss of the NG when passing through the delivery side inter-vaporizing tube diaphragms 25 in the same manner as the supply side inter-vaporizing tube diaphragms 23. The delivery side inter-vaporizing tube diaphragms 25 of the present embodiment are orifices.

In addition, the cross-sectional area of the flow path (flow path cross-sectional area) of NG within the delivery side inter-vaporizing tube diaphragms 25 is larger than the cross-sectional area of the flow path (flow path cross-sectional area) of LNG within the supply side inter-vaporizing tube diaphragms 23. By making the flow path cross-sectional area of the delivery side inter-vaporizing tube diaphragms 25 to be larger than that of the supply side inter-vaporizing tube diaphragms 23 in this manner, in comparison with the case of making the flow path cross-sectional area of the LNG or NG supply side and delivery side diaphragms to be equal with respect to the vaporizing tubes 21, internal pressure in the vaporizing tubes 21 and the like can be suppressed. As a result, a thermohydraulic destabilizing phenomenon caused by the insides of the vaporizing tubes 21 reaching a high pressure during the course of vaporization of LNG can be inhibited.

The plurality of vaporizing tube panels 16 composed in this manner are arranged in a direction (right-left direction in Fig. 1) perpendicular to the panel surfaces (the above-mentioned specific vertical plane in which the vaporizing tubes 21 are arranged) in a mutually parallel alignment.

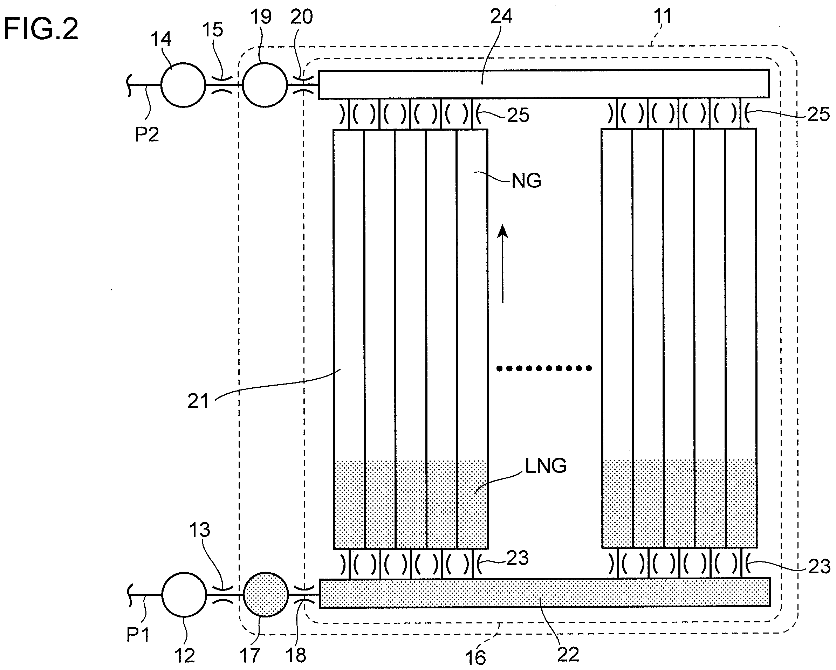

The supply side manifold 17 is a tube that extends in a direction that intersects with the supply side headers 22 (roughly perpendicular direction in the present embodiment: direction perpendicular to the page in Fig. 2), and connects each supply side header 22 contained in a common vaporizing tube block 11 with the dispensing tube 12. The supply side inter-panel diaphragms (inter-panel pulsation suppression units provided on the supply side of LNG with respect to the vaporizing tube panels 16) 18 are respectively provided at each connection with the supply side headers 22 in the supply side manifold 17.

The supply side inter-panel diaphragms 18 suppress the propagation of pressure pulsation between the vaporizing tube panels 16 on the supply side of LNG with respect to the vaporizing tube panels 16. More specifically, the inside of each vaporizing tube panel 16 is communicated with the inside of the supply side manifold 17 via each of the supply side inter-panel diaphragms 18. Each of the supply side inter-panel diaphragms 18 suppresses the mutual propagation of pressure pulsation between the vaporizing tube panels 16 that propagates through the LNG in the tubes. The supply side inter-panel diaphragms 18 locally reduce the cross-sectional area of the flow path of LNG in the supply side manifold 17 and the supply side headers 22. As a result of this local reduction in flow path cross-sectional area, pressure pulsation that passes through the supply side inter-panel diaphragms 18 decreases due to attenuation effects based on a pressure loss of the LNG when passing through the supply side inter-panel diaphragms 18. The supply side inter-panel diaphragms 18 of the present embodiment are orifices.

The delivery side manifold 19 is a tube that extends in a direction that intersects with the delivery side headers 24 (roughly perpendicular direction in the present embodiment: direction perpendicular to the page in Fig. 2), and is connected to each delivery side header 24 contained in a common vaporizing tube block 11 and to the collecting tube 14. The delivery side inter-panel diaphragms (inter-panel pulsation suppression units provided on the delivery side of NG (vaporized LNG) with respect to the vaporizing tube panels 16) 20 are respectively provided at each connection with the delivery side headers 24 in the delivery side manifold 19.

The delivery side inter-panel diaphragms 20 suppress the propagation of pressure pulsation between the vaporizing tube panels 16 on the delivery side of NG with respect to the vaporizing tube panels 16. More specifically, the inside of each vaporizing tube panel 16 is communicated with the inside of the delivery side manifold 19 via each of the delivery side inter-panel diaphragms 20. Each of the delivery side inter-panel diaphragms 20 suppresses the mutual propagation of pressure pulsation between the vaporizing tube panels 16 that propagates through the NG in the tubes. The delivery side inter-panel diaphragms 20 locally reduce the flow path cross-sectional area of NG in the delivery side manifold 19 and the delivery side headers 24. As a result of this local reduction in flow path cross-sectional area, pressure pulsation that passes through the delivery side inter-panel diaphragms 20 decreases due to attenuation effects based on a pressure loss of the NG when passing through these diaphragms in the same manner as the supply side inter-panel diaphragms 18. The delivery side inter-panel diaphragms 20 of the present embodiment are orifices.

In addition, the cross-sectional area of the flow path (flow path cross-sectional area) of NG within the delivery side inter-panel diaphragms 20 is larger than the cross-sectional area of the flow path (flow path cross-sectional area) of LNG within the supply side inter-panel diaphragms 18. By making the flow path cross-sectional area of the delivery side inter-panel diaphragms 20 to be larger than that of the supply side inter-panel diaphragms 18 in this manner, in comparison with the case of making the flow path cross-sectional area of the LNG or NG supply side and delivery side diaphragms to be equal with respect to the vaporizing tube panels, internal pressure in the vaporizing tube panels 16 can be suppressed. As a result, a thermohydraulic destabilizing phenomenon caused by the insides of the vaporizing tubes 21 reaching a high pressure during the course of vaporization of LNG can be inhibited.

The dispensing tube 12 is a tube that extends roughly parallel to the supply side manifolds 17, and is connected to each of the supply side manifolds 17. In addition, a supply side connection 12a is provided in the dispensing tube 12 that connects a pipe P1 for supplying LNG to the vaporizer 10 from the outside. Supply side inter-block diaphragms (inter-block pulsation suppression units provided on the supply side of LNG with respect to the vaporizing tube blocks 11) 13 are respectively provided at each of the connections of the dispensing tube 12 with the supply side manifolds 17.

Furthermore, the dispensing tube 12 is a site that communicates the vaporizing tube blocks 11 to each other in a pipe by which LNG is supplied from a supply source such as a supply pump. Although the dispensing tube 12 of the present embodiment is composed of a pipe for dispensing LNG supplied from the pipe P1 to each of the supply side manifolds 17, it is not limited thereto. For example, a dispensing tube may be composed of connecting tubes that branch from the pipe P1 and are connected to each of the supply side manifolds 17 and a site of the pipe P1 that connects these connecting pipes. Namely, this dispensing tube may be composed such that LNG is dispensed (supplied) directly to the supply side manifolds 17 from the pipe P1.

The supply side inter-block diaphragms 13 suppress the propagation of pressure pulsation between the vaporizing tube blocks 11 on the supply side of LNG with respect to the vaporizing tube blocks 11. More specifically, the inside of each vaporizing tube block 11 is communicated with the inside of the dispensing tube 12 via each of the supply side inter-block diaphragms 13. Each of the supply side inter-block diaphragms 13 suppresses the mutual propagation of pressure pulsation between the vaporizing tube blocks 11 that propagates through the LNG in the tubes. The supply side inter-block diaphragms 13 locally reduce the flow path cross-sectional area of LNG in the dispensing tube 12 and the supply side manifolds 17. As a result of this local reduction in flow path cross-sectional area, pressure pulsation that passes through the supply side inter-block diaphragms 13 decreases due to attenuation effects based on a pressure loss of the LNG when passing through the diaphragms 13. The supply side inter-block diaphragms 13 of the present embodiment are orifices.

The collecting tube 14 is a tube that extends roughly parallel to the delivery side manifolds 19, and is connected to each of the delivery side manifolds 19. In addition, a delivery side connection 14a is provided in the collecting tube 14 that connects a pipe P2 for sending out NG to the outside such as a consumption site. Delivery side inter-block diaphragms (inter-block pulsation suppression units provided on the delivery side of NG (vaporized LNG) with respect to the vaporizing tube blocks 11) 15 are respectively provided at each of the connections of the collecting tube 14 with the delivery side manifolds 19.

Furthermore, the collecting tube 14 is a site that communicates the vaporizing tube blocks 11 to each other in a pipe that sends out LNG vaporized in each of the vaporizing tube blocks 11 to a consumption site and the like. Although the collecting tube 14 of the present embodiment is composed of a pipe that collects NG from each of the delivery side manifolds 19 and sends it out to the pipe P2, it is not limited thereto. For example, a collecting tube may be composed of connecting tubes that branch from the pipe P2 and are connected to each of the delivery side manifolds 19 and a site of the pipe P2 that communicates these connecting pipes to each other. Namely, this collecting tube may be composed such that NG is sent out directly to the pipe P2 from each of the delivery side manifolds 19.

The delivery side inter-block diaphragms 15 suppress the propagation of pressure pulsation between the vaporizing tube blocks 11 on the delivery side of NG with respect to the vaporizing tube blocks 11. More specifically, the inside of each vaporizing tube block 11 is communicated with the inside of the collecting tube 14 via each of the delivery side inter-block diaphragms 15. Each of the delivery side inter-block diaphragms 15 suppresses the mutual propagation of pressure pulsation between the vaporizing tube blocks 11 that propagates through the NG in the tubes. The delivery side inter-block diaphragms 15 locally reduce the flow path cross-sectional area of NG in the collecting tube 14 and the delivery side manifolds 19. As a result of this local reduction in flow path cross-sectional area, pressure pulsation that passes through the delivery side inter-block diaphragms 15 decreases due to attenuation effects based on a pressure loss of the NG when passing through the delivery side inter-block diaphragms 15 in the same manner as the supply side inter-block diaphragms 13. The delivery side inter-block diaphragms 15 of the present embodiment are orifices.

According to the invention, the cross-sectional area of the flow path (flow path cross-sectional area) of NG within the delivery side inter-block diaphragms 15 is larger than the cross-sectional area of the flow path (flow path cross-sectional area) of LNG within the supply side inter-block diaphragms 13. By making the flow path cross-sectional area of the delivery side inter-block diaphragms 15 to be larger than that of the supply side inter-block diaphragms 13 in this manner, in comparison with the case of making the flow path cross-sectional area of the LNG or NG supply side and delivery side diaphragms to be equal with respect to the vaporizing tube blocks 11, internal pressure in the vaporizing tube blocks 11 can be suppressed. As a result, a thermohydraulic destabilizing phenomenon caused by the insides of the vaporizing tubes 21 reaching a high pressure during the course of vaporization of LNG can be inhibited.

A seawater supply unit 30 is provided with a trough 31 arranged in the vicinity of the upper ends of each of the vaporizing tube panels 16, a seawater header 32 that supplies seawater to each trough 31, and a seawater manifold 33 that dispenses seawater to each seawater header 32. The trough 31 dispenses seawater to the upper end of each vaporizing tube panel 16 so that the seawater flows down along the surfaces of the vaporizing tube panels 16 (and more precisely, each of the vaporizing tubes 21 that compose the panels 16). Seawater supplied from this trough 31 that flows down the surfaces of the vaporizing tube panels 16 and LNG flowing within each of the vaporizing tubes 21 exchange heat through the tube walls of the vaporizing tubes 21 resulting in vaporization of LNG into NG.

The vaporizer 10 configured in this manner vaporizes LNG in the manner described below.

Seawater is supplied to the surfaces of each of the vaporizing tube panels 16 from the trough 31. LNG is supplied from a supply pump and the like to the dispensing tube 12 through the pipe P1 connected at the supply side connection 12a. The dispensing tube 12 dispenses LNG supplied by a supply pump and the like to each of the supply side manifolds 17 connected to the dispensing tube 12, and each of the supply side manifolds 17 dispenses LNG from the dispensing tube 12 to each of the supply side headers 22 connected to the supply side manifolds 17. Each of the supply side headers 22 dispenses the supplied LNG to each of the vaporizing tubes 21 connected to the supply side headers 22. In each of the vaporizing tubes 21, LNG supplied from the supply side headers 22 flows therethrough from the lower end to the upper end thereof. At this time, LNG flowing through the vaporizing tubes 21 exchanges heat with seawater flowing downward along the surfaces of the vaporizing tubes 21 through the tube walls of the vaporizing tubes 21. LNG is vaporized to NG as a result of this heat exchange.

LNG vaporized in each of the vaporizing tubes 21 in this manner, namely NG, is then collected by the delivery side headers 24, and is sent out to the delivery side manifolds 19. The NG sent to the delivery side manifolds 19 then passes through the collecting tube 14 and is sent out to a consumption site and the like through the pipe P2 connected at the delivery side connection 14a.

In the vaporizer 10 of the present embodiment, there are cases in which LNG is vaporized at a high-pressure state in which internal pressure of each of the vaporizing tubes 21 is 70 bar to 80 bar. In such a high-pressure state, if the flow volume of LNG flowing through the vaporizer 10 is low, a thermohydraulic destabilizing phenomenon occurs during the course of LNG vaporization, causing the occurrence of pressure pulsation in each of the vaporizing tubes 21. Pressure pulsation that has occurred in each of the vaporizing tubes 21 interacts while propagating through the LNG (or NG), eventually expanding throughout the vaporizing tube blocks 11, and resulting in the generation of pressure pulsation in the individual vaporizing tube panels 16 and vaporizing tube blocks 11.

In an ordinary vaporizer, there is the risk of this pressure pulsation increasing in amplitude when it expands throughout the vaporizing tube blocks. For example, if pressure pulsation propagates between the vaporizing tubes via the supply side headers or the delivery side headers, the pressure pulsation in each of the vaporizing tubes interacts (namely, generates hydraulic coupled vibrations), resulting in the risk of an increase in amplitude thereof. If the amplitude of pressure pulsation increases in each of the vaporizing tubes, the amplitude of that pressure pulsation also increases in the individual vaporizing tube panels composed by these vaporizing tubes. If pressure pulsation propagates between the vaporizing tube panels via the supply side manifolds or delivery side manifolds while in this state of increased amplitude, the pressure pulsation in each of the vaporizing tube panels interacts resulting in an increase in amplitude thereof. If the amplitude of that pressure pulsation increases in each of the vaporizing tube panels, the amplitude of pressure pulsation also increases in the individual vaporizing tube blocks composed by these vaporizing tube panels. Pressure pulsation is then propagated in the vaporizing tube blocks via the dispensing tube or collecting tube while in this state of increased amplitude, and the pressure pulsation that has been generated in each of the vaporizing tube panels interacts. As a result, the pressure pulsation having increased amplitude generates an exciting force in the form of vibrations in the vaporizer and piping system connected thereto.

In contrast, in the vaporizer 10 according to the present embodiment, vibrations attributable to the flow of LNG (or NG) through the piping is effectively suppressed by each of the supply side inter-block diaphragms 13, delivery side inter-block diaphragms 15, the supply side inter-panel diaphragms 18, the delivery side inter-panel diaphragms 20, the supply side inter-vaporizing tube diaphragms 23 and the delivery side inter-vaporizing tube diaphragms 25. More specifically, the propagation of pressure pulsation between the vaporizing tube blocks 11 is effectively suppressed by the supply side inter-block diaphragms 13 and the delivery side inter-block diaphragms 15, and as a result thereof, increases in the amplitude of pressure pulsation occurring in the individual vaporizing tube blocks 11 that have a considerable effect on vibration of the vaporizer 10 and the like can be suppressed. Moreover, in the present embodiment, the supply side inter-vaporizing tube diaphragms 23 and the delivery side inter-vaporizing tube diaphragms 25 suppress increases in the amplitude of pressure pulsation occurring in the individual vaporizing tubes 21. As a result, the supply side inter-vaporizing tube diaphragms 23 and the delivery side inter-vaporizing tube diaphragms 25 suppress the amplitude of pressure pulsation in the individual vaporizing tube panels 16 and the individual vaporizing tube blocks 11 caused by pressure pulsation that has propagated from the vaporizing tubes 21. In conjunction therewith, each of the diaphragms 13, 15, 18 and 20 respectively suppress increases in amplitude caused by interaction of pressure pulsation in the individual vaporizing tube panels 16 as well as increases in amplitude caused by interaction of pressure pulsation in the individual vaporizing tube blocks 11.

More specifically, since the diaphragms 23 and 25 are respectively provided in the flow paths connecting the vaporizing tubes 21 (supply side headers 22 and delivery side headers 24), pressure pulsation passing through the diaphragms 23 and 25 decrease due to attenuation effects based on pressure loss before and after the diaphragms 23 and 25, and as a result thereof, propagation of pressure pulsation between the vaporizing tubes 21 is effectively suppressed. Simultaneous thereto, the propagation of pressure pulsation between the vaporizing tube panels 16 is suppressed by the supply side inter-panel diaphragms 18 and the delivery side inter-panel diaphragms 20, while propagation of pressure pulsation between the vaporizing tube blocks 11 is suppressed by the supply side inter-block diaphragms 13 and the delivery side inter-block diaphragms 15. In this manner, as a result of each of the diaphragms 13, 15, 18, 20, 23 and 25 respectively the amplitude of a) pressure pulsation that has occurred in the individual vaporizing tubes 21, b) pressure pulsation that has occurred in the individual vaporizing tube panels 16, and c) pressure pulsation that has occurred in the individual vaporizing tube blocks 11, vibrations attributable to the flow of LNG (or NG) through the piping can be suppressed extremely effectively.

Thus, since the diaphragms 13, 15, 18, 20, 23 and 25 respectively provided in the dispensing tube 12, the collecting tube 14, each of the manifolds 17 and 19 and each of the headers 22 and 24 suppress vibrations attributable to the flow of LNG or NG in the piping, it is not necessary to specially enhance the rigidity of the entire vaporizer 10 to suppress those vibrations. Accordingly, increases in thermal stress in the vaporizer 10 caused by increased rigidity can also be avoided.

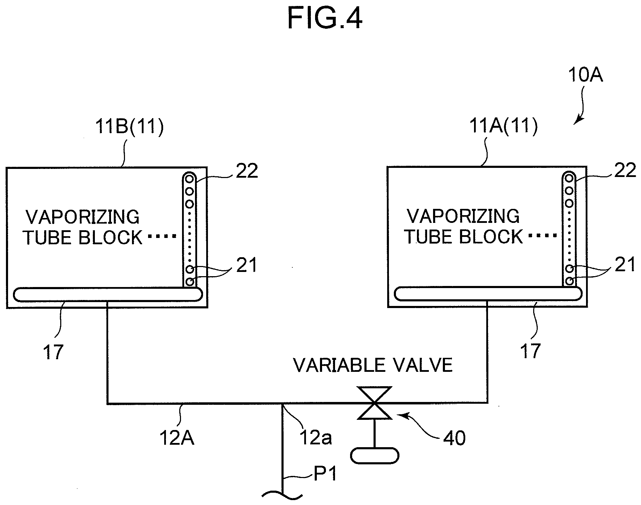

Although the following provides an explanation of a vaporizer not part of the present invention with reference to Fig. 4, the same reference symbols are used to indicate those constituents of the second embodiment that are the same as those of the first embodiment, detailed explanations thereof are omitted, and detailed explanations are only provided for those constituents that differ from those of the first embodiment.

A vaporizer 10A is provided with a plurality of the vaporizing tube blocks 11 (two vaporizing tube blocks 11A and 11B in the present embodiment) and a dispensing tube 12A. On the other hand, this vaporizer 10A differs from the vaporizer 10 of the first embodiment in that is it not provided with the supply side inter-block diaphragms 13, the delivery side inter-block diaphragms 15, the supply side inter-panel diaphragms 18, the delivery side inter-panel diaphragms 20, the supply side inter-vaporizing tube diaphragms 23 or the delivery side inter-vaporizing tube diaphragms 25.

An inter-block pulsation suppression unit in the form of a variable valve 40 is provided in the dispensing tube 12A. This variable valve 40 is provided in the flow path of LNG to a specific vaporizing tube block 11A in the dispensing tube 12A. More specifically, the variable valve 40 is provided between a supply side connection 12a in the dispensing tube 12A and the supply side manifold 17 of the specific vaporizing tube block 11A (vaporizing tube block on the left side of Fig. 4), and is able to change the cross-sectional area of the flow path (flow path cross-sectional area) of the site where the variable valve 40 is provided. Namely, the variable valve 40 is able to locally reduce the cross-sectional area of the flow path (flow path cross-sectional area) formed from the supply side connection 12a to the specific vaporizing tube block 11A in the dispensing tube 12A by being operated so as to narrow the flow path.

In this vaporizer 10A, the variable valve 40 is operated based on the flow volume of LNG supplied to the vaporizer 10A from a supply pump and the like. More specifically, the variable valve 40 is reduced in opening area when the flow volume of LNG supplied to the vaporizer 10A is small. As a result, the cross-sectional area of the flow path (flow path cross-sectional area) in the dispensing tube 12A that connects the vaporizing tube blocks 11 is locally reduced. This is because there is increased susceptibility to the occurrence of a thermohydraulic destabilizing phenomenon in the vaporizing tubes 21 when the flow volume of LNG to the vaporizing tubes 21 in a high-pressure state is small. In this manner, the variable valve 40 is reduced in opening area when the flow volume of LNG supplied to the vaporizer 10A is small. As a result, the variable valve 40 effectively suppresses the propagation of pressure pulsation between the vaporizing tube blocks 11 by locally reducing the cross-sectional area of the flow path within the dispensing tube 12A. As a result, the variable valve 40 suppresses increases in amplitude of pressure pulsation occurring in the individual vaporizing tube blocks 11 that have a considerable effect on vibration of the vaporizer 10A and the like. In this manner, vibrations occurring attributable to vaporization of LNG can be effectively suppressed in the vaporizer 10A. Moreover, since the variable valve 40 provided in the dispensing tube 12A suppresses vibrations attributable to the flow of LNG through the piping, it is not necessary to specially enhance the rigidity of the entire vaporizer 10A in order to suppress those vibrations. Accordingly, increases in thermal stress in the vaporizer caused by increased rigidity can also be avoided.

In addition, since LNG flows to both of the vaporizing tube blocks 11, in comparison with the case of LNG flowing to only one of the vaporizing tube blocks 11, differences in service life of spray coating carried out on the surface of each of the vaporizing tube blocks 11 are inhibited, thereby making it possible to carry out recoating work based on the service life of spray coating simultaneously on both blocks 11. The following provides a detailed explanation thereof. Since this vaporizer 10A is configured so that seawater supplied from the seawater supply unit 30 flows down over the surfaces of each of the vaporizing tube panels 16, spray coating is carried out on the surfaces of each of the vaporizing tube blocks 11 to prevent corrosion caused by the seawater. This spray coating gradually becomes thinner with operation of the vaporizer 10A. The degree of this reduction in thickness of the spray coating varies according operating conditions such as the flow rate of LNG (NG) flowing through the vaporizing tubes 21 or the surface temperature thereof. Consequently, if LNG is supplied to only one of the vaporizing tube blocks 11, the service life of the spray coating becomes shorter for that single vaporizing tube block 11 only. Therefore, the temperature difference between both blocks 11 can be inhibited by supplying LNG to both of the vaporizing tube blocks 11 even when the flow volume of LNG supplied to the vaporizer 10A is small, thereby making it possible to suppress the difference in service life of the spray coating carried out on the surfaces of each of the vaporizing tube blocks 11. As a result, recoating work based on the service life of the spray coating can be carried out simultaneously on both of the blocks 11.

On the other hand, the variable valve 40 is opened when the flow volume of LNG supplied to the vaporizer 10A is large, and is operated so as to increase the flow path cross-sectional area in the variable valve 40. This is because there is less likelihood of the generation of pressure pulsation in the piping of the vaporizer 10A (such as the vaporizing tubes 21, the headers 22 and 24, the manifolds 17 and 29, the dispensing tube 12A or the collecting tube 14) when the flow volume of LNG supplied to the vaporizer 10A is large. By opening the variable valve 40 in the manner described above at this time, in addition to pressure loss within the dispensing tube 12A being reduced, the flow volume of LNG supplied to a specific vaporizing tube block 11 increases, thereby improving vaporization efficiency of the vaporizer 10A as a result thereof.

Control of opening and closing of the variable valve 40 based on the flow volume of LNG as described above may be carried out manually or may be carried out automatically by a controller and the like based on the flow volume of LNG supplied to the vaporizer 10A.

Furthermore, the variable valve 40 may not only be provided between the supply side connection 12a of the dispensing tube 12A and the supply side manifold 17 of the specific vaporizing tube block 11A, but may also be respectively provided between the supply side connection 12a and the supply side manifold 17 of each of the vaporizing tube blocks 11A and 11B. In addition, the variable valve 40 may also be provided in the collecting tube 14 (see Fig. 1). In this case as well, the variable valve 40 may be provided between the delivery side connection 14a and the delivery side manifold 19 of the specific vaporizing tube block 11A, or may be respectively provided between the delivery side connection 14a and the delivery side manifold 19 of each of the vaporizing tube blocks 11A and 11B. As a result of reducing in opening area of the variable valve 40 positioned in this manner as well, the propagation of pressure pulsation in the vaporizing tube blocks 11 can be effectively suppressed in at least one of the dispensing tube 12A and the collecting tube 14.

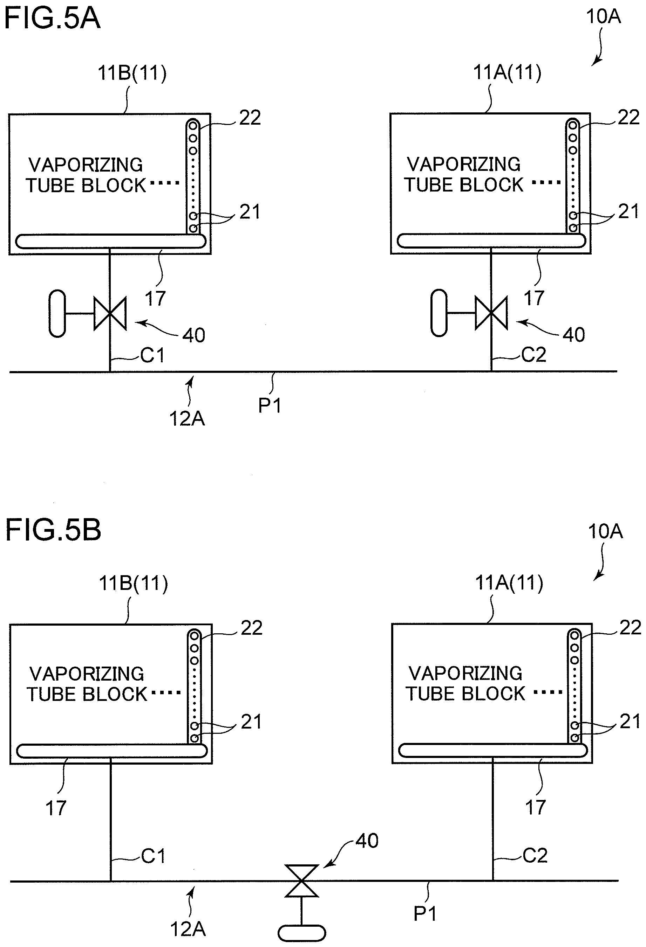

In addition, there are no particular limitations on the specific configuration of the dispensing tube 12A. Although the dispensing tube 12A in the present embodiment is configured with a tube that dispenses LNG supplied from the pipe (main pipe) P1 to each of the vaporizing tube blocks 11, as shown in Figs. 5A and 5B, for example, the dispensing tube 12A may also be configured so that LNG is supplied directly from the pipe P1 to each of the vaporizing tube blocks 11. Namely, the dispensing tube 12A may be configured with connecting tubes C1 and C2 branched from the pipe P1 and a site of the pipe P1 that connects these connecting tubes C1 and C2. In this case, the variable valve 40 may be respectively provided in each of the connecting tubes C1 and C2, or may only be provided in one of the connecting tubes C1 (or C2). In addition, the variable valve 40 may also be provided between the upstream side connecting tube C1 and the downstream side connecting tube C2 in the pipe P1 (see Fig. 5B). In addition, similarly to the dispensing tube 12A, the collecting tube 14 may also be configured with connecting tubes branched from the pipe P2 and connected to each of the vaporizing tube blocks 11 and a site of the pipe P2 that connects these connecting tubes. In this case as well, the variable valve 40 may be respectively provided in each of the connecting tubes, or may only be provided in one of the connecting tubes. In addition, the variable valve 40 may also be provided between the upstream side connecting tube and the downstream side connecting tube in the pipe P2.

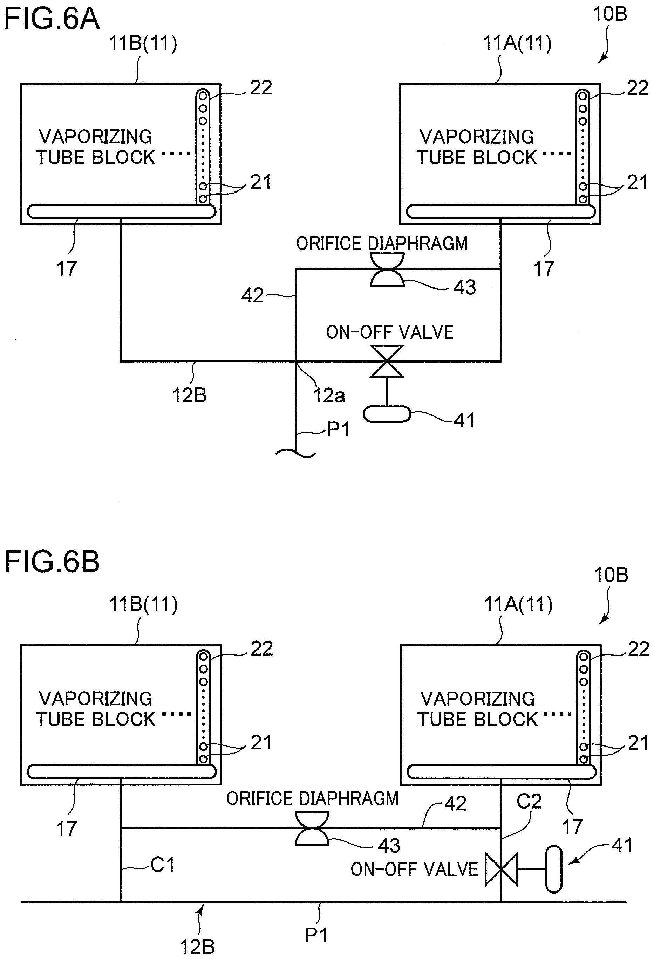

Although the following provides an explanation of a further embodiment of the present invention with reference to Fig. 6A, the same reference symbols are used to indicate those constituents of the third embodiment that are the same as those of the first and second embodiments, detailed explanations thereof are omitted, and detailed explanations are only provided for those constituents that differ from those of the first and second embodiments.

A vaporizer 10B according to the present embodiment is provided with a dispensing tube 12B. An inter-block pulsation suppression unit in the form of an on-off valve (on-off member) 41 and a bypass tube 42 are provided in this dispending tube 12B.

The on-off valve 41 is provided in the flow path of LNG to the specific vaporizing tube block 11A (the vaporizing tube block on the right side in Fig. 6A) in the dispensing tube 12B. More specifically, the on-off valve 41 is provided between the supply side connection 12a in the dispensing tube 12B and the supply side manifold 17 of the specific vaporizing tube block 11A, and opens and closes the flow path at the site where the on-off valve 41 is provided.

The bypass tube 42 forms a flow path that branches from the dispensing tube 12B upstream from the on-off valve 41 and allows LNG to flow into the above-mentioned specific vaporizing tube block 11A while bypassing the on-off valve 41. The bypass tube 42 of the present embodiment branches from the dispensing tube 12B upstream from the on-off valve 41, and is connected to the dispensing tube 12B downstream from the on-off valve 41 after having bypassed the on-off valve 41. Furthermore, the bypass tube 42 may also branch from the dispensing tube 12B upstream from the on-off valve 41 and be connected directly to the vaporizing tube block 11A downstream from the on-off valve 41 (and more precisely, to the supply side manifold 17).

The bypass tube 42 has a diaphragm (bypass diaphragm) 43. This diaphragm 43 locally reduces the cross-sectional area of the flow path (flow path cross-sectional area) formed in the bypass tube 42. The diaphragm 43 of the present embodiment is an orifice.

In this vaporizer 10B, the on-off valve 41 is operated based on the flow volume of LNG supplied to the vaporizer 10B from a supply pump and the like. More specifically, the on-off valve 41 is closed when the flow volume of LNG supplied to the vaporizer 10B is small. As a result, LNG is allowed to be supplied to the specific vaporizing tube block 11A through the bypass tube 42. As a result, the specific vaporizing tube block 11A and the other vaporizing tube block 11B are mutually communicated only through the bypass tube 42 in which the cross-sectional area of the flow path formed therein has been locally reduced by the diaphragm 43.

There is increased susceptibility to the occurrence of a thermohydraulic destabilizing phenomenon in the vaporizing tubes 21 when the flow volume of LNG to the vaporizing tubes 21 in a high-pressure state is small. Consequently, the propagation of pressure pulsation in the vaporizing tube blocks 11 can be effectively suppressed by closing the on-off valve 41 to create a state in which the specific vaporizing tube block 11A and the other vaporizing tube block 11B are communicated through the bypass tube 42 having the diaphragm 43. As a result, increases in amplitude of pressure pulsation occurring in the individual vaporizing tube blocks 11 that have a considerable effect on vibration of the vaporizer 10B and the like can be suppressed. As a result, vibrations occurring attributable to vaporizing of LNG can be effectively suppressed in the vaporizer 10B. Moreover, since vibrations attributable to the flow of LNG through the piping are suppressed by the on-off valve 41 and the bypass tube 42, it is not necessary to enhance rigidity of the entire vaporizer 10B in order to suppress vibrations, and there is also no occurrence of increases in thermal stress in the vaporizer 10B attributable thereto.

In addition, since LGN flows to both of the vaporizing tube blocks 11, in comparison with the case of LNG flowing to only one of the vaporizing tube blocks 11, differences in service life of spray coating carried out on the surface of each of the vaporizing tube blocks 11 are inhibited, thereby making it possible to carry out recoating work based on the service life of spray coating simultaneously on both blocks 11.

On the other hand, the on-off valve 41 is opened when the flow volume of LNG supplied to the vaporizer 10B is large since there is less likelihood of the generation of pressure pulsation in the piping of the vaporizer 10B (such as the vaporizing tubes 21, the headers 22 and 24, the manifolds 17 and 29, the dispensing tube 12B and the collecting tube 14). As a result, in addition to pressure loss within the dispensing tube 12B being reduced, the flow volume of LNG supplied to a specific vaporizing tube block 11A increases, thereby improving vaporization efficiency of the vaporizer 10B.

Control of opening and closing of the on-off valve 41 based on the flow volume of LNG as described above may be carried out manually or may be carried out automatically by a controller and the like based on the flow volume of the supplied LNG.

Furthermore, there are no particular limitations on the specific configuration of the dispensing tube 12B. Although the dispensing tube 12B in the present embodiment is configured with a tube that dispenses LNG supplied from the pipe P1 to each of the vaporizing tube blocks 11, as shown in Fig. 6B, for example, the dispensing tube 12B may also be configured with the connecting tubes C1 and C2 branched from the pipe P1 and a site of the pipe P1 that connects these connecting tubes C1 and C2. In this case, for example, the bypass tube 42 may be arranged so as to mutually connect the upstream connecting tube C1 and the downstream connecting tube C2, and the on-off valve 41 may be provided upstream from the connection between the connecting tube C2 and the bypass tube 42 in the downstream connecting tube C2.

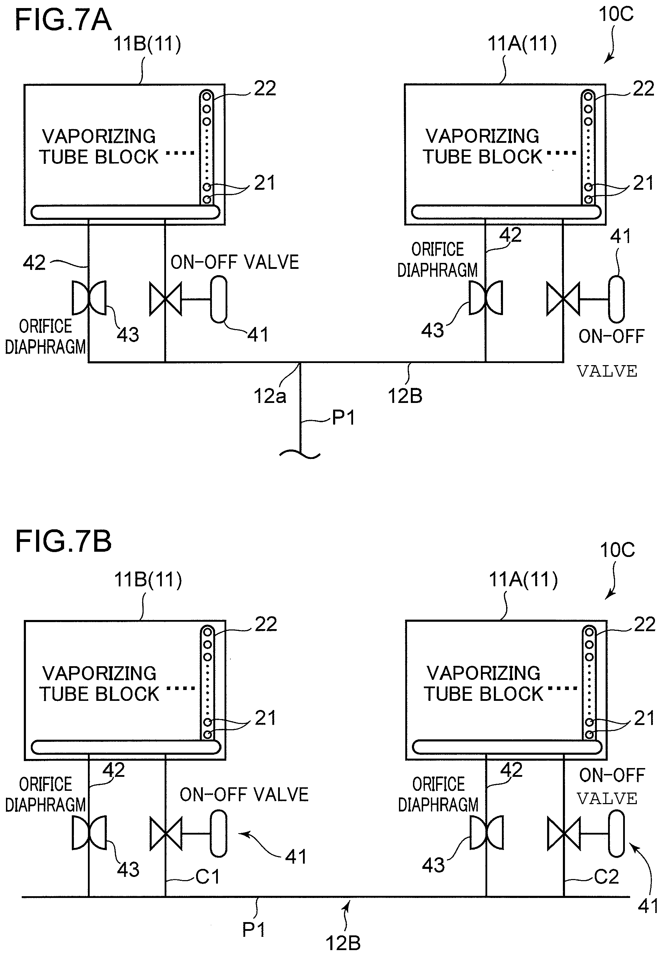

In addition, the on-off valve 41 and the bypass tube 42 may also be respectively provided between the supply side connection 12a of the dispensing tube 12B and each of the vaporizing tube blocks 11A and 11B in the manner of a vaporizer 10C shown in Fig. 7A. In addition, in the case the dispensing tube 12B is composed of the pipe P1 and the connecting tubes C1 and C2 branching from this pipe, the on-off valve 41 may be respectively provided in each of the connecting tubes C1 and C2, and the bypass tube 42 may be respectively provided between the pipe P1 and each of the vaporizing tube blocks 11 as shown in Fig. 7B.

According to the invention, the on-off valve 41 and the bypass tube 42 is provided in the collecting tube 14 (see Fig. 1). In this case as well, the on-off valve 41 and the bypass tube 42 may be provided between the delivery side connection 14a and the specific vaporizing tube block 11A, or may be respectively provided between the delivery side connection 14a and each of the vaporizing tube blocks 11A and 11B. In addition, in the case the collecting tube 14 is composed of connecting tubes branched from the pipe P2 and connected to each of the vaporizing tube blocks 11 and a site of the pipe P2 that connects these connecting tubes, the on-off valve 41 may be respectively provided in each of the connecting tubes, and the bypass tube 42 may be respectively provided between the pipe P2 and each of the vaporizing tube blocks 11.

Even if the on-off valve 41 and the bypass tube 42 are provided in this manner, by closing the on-off valve 41 at each location, the propagation of pressure pulsation between the vaporizing tube blocks 11 can be effectively suppressed in at least one of the dispensing tube 12B (or 12C) and the collecting tube 14.

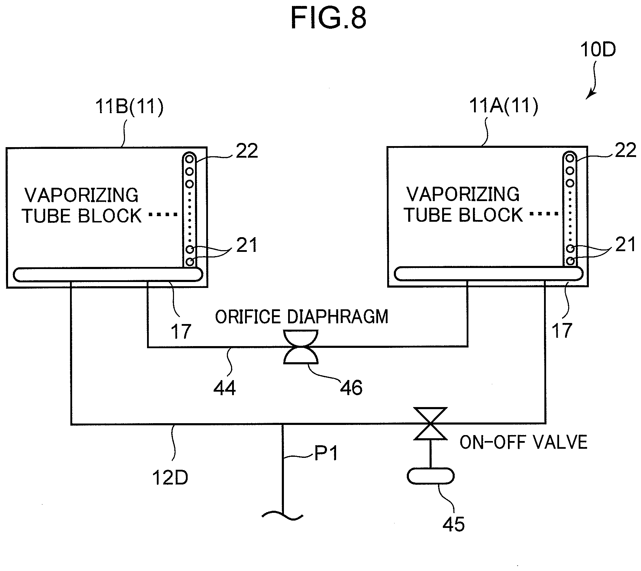

Although the following provides an explanation of a further embodiment of the present invention with reference to Fig. 8, the same reference symbols are used to indicate those constituents of the fourth embodiment that are the same as those of the first to third embodiments, detailed explanations thereof are omitted, and detailed explanations are only provided for those constituents that differ from those of the first to third embodiments.

A vaporizer 10D according to the present embodiment is provided with a dispensing tube 12D and an interconnecting tube 44. This dispensing tube 12D has an on-off valve (on-off member) 45. This on-off valve 45 composes an inter-block pulsation suppression unit in the vaporizer 10D together with the interconnecting tube 44.

The on-off valve 45 is provided in the flow path of LNG to the specific vaporizing tube block 11A in the dispensing tube 12B. More specifically, the on-off valve 45 is provided in the dispensing tube 12D between the supply side connection 12a and the supply side manifold 17 of the specific vaporizing tube block 11A, and opens and closes the flow path at the site where the on-off valve 41 is provided.

The interconnecting tube 44 connects the specific vaporizing tube block 11A with the other vaporizing tube block 11B. More specifically, the interconnecting tube 44 connects the supply side manifold 17 of the specific vaporizing tube block 11A with the supply side manifold 17 of the other vaporizing tube block 11B, and as a result thereof, the supply sides of both of the blocks 11A and 11B are mutually communicated. When the above-mentioned on-off valve 45 is closed while in this state, the specific vaporizing tube block 11A and the other vaporizing tube block 11B are only communicated by the interconnecting tube 44.

A diaphragm (interconnecting diaphragm) 46 is provided in the interconnecting tube 44. The diaphragm 46 locally reduces the cross-sectional area of the flow path (flow path cross-sectional area) formed in the interconnecting tube 44. The diaphragm 46 of the present embodiment is an orifice.

In this vaporizer 10D, the on-off valve 45 is opened and closed based on the flow volume of LNG supplied to the vaporizer 10D from a supply pump and the like. More specifically, the on-off valve 45 is closed when the flow volume of LNG supplied to the vaporizer 10D is small. Whereupon, the supply of LNG from the dispensing tube 12D to the specific vaporizing tube block 11A is stopped, and LNG is essentially only supplied to the vaporizing tube block 11B from the dispensing tube 12D. LNG supplied to the supply side manifold 17 of this vaporizing tube block 11B is dispensed to each of the vaporizing tube panels 16 (and more precisely, each of the supply side headers 22) contained in the other vaporizing tube block 11B, and is also supplied to the specific vaporizing tube block 11A only through the interconnecting tube 44 in which the cross-sectional area of the flow path formed therein is locally reduced by the diaphragm 46.

There is increased susceptibility to the occurrence of a thermohydraulic destabilizing phenomenon in the vaporizing tubes 21 when the flow volume of LNG to the vaporizing tubes 21 in a high-pressure state is small. Consequently, the propagation of pressure pulsation between the vaporizing tube blocks 11 can be effectively suppressed by the diaphragm 46 by closing the on-off valve 45 and essentially connecting the dispensing tube 12D to only the vaporizing tube block 11B so that LNG is supplied to the vaporizing tube block 11A from this vaporizing tube block 11 only through the interconnecting tube 44 that contains the diaphragm 46. As a result, increases in amplitude of pressure pulsation occurring in the individual vaporizing tube blocks 11 that have a considerable effect on vibration of the vaporizer 10D and the like can be suppressed. As a result, vibrations occurring attributable to vaporizing of LNG can be effectively suppressed in the vaporizer 10D. Moreover, since vibrations attributable to the flow of LNG through the piping are suppressed by providing the on-off valve 45 and the tube (interconnecting tube) 44, there is no occurrence of increases in thermal stress in the vaporizer 10D as in the case of suppressing the above-mentioned vibrations by enhancing the rigidity of the vaporizer 10D.

In addition, since LNG flows to both of the vaporizing tube blocks 11, in comparison with the case of LNG flowing to only one of the vaporizing tube blocks 11, differences in service life of spray coating carried out on the surface of each of the vaporizing tube blocks 11 are inhibited, thereby making it possible to carry out recoating work based on the service life of spray coating simultaneously on both blocks 11.

On the other hand, the on-off valve 45 is opened when the flow volume of LNG supplied to the vaporizer 10D is large. Since there is less likelihood of the generation of pressure pulsation in the piping of the vaporizer 10D (such as the vaporizing tubes 21, the headers 22 and 24, the manifolds 17 and 29, the dispensing tube 12B and the collecting tube 14) at this time, by opening the on-off valve 45 and allowing LNG to be supplied directly to the vaporizing tube block 11A from the dispensing tube 12D, pressure loss in the vaporizer 10D can be reduced, and the flow volume of LNG supplied to the specific vaporizing tube block 11A can be increased, thereby making it possible to improve vaporization efficiency of the vaporizer 10D.

Control of opening and closing of the on-off valve 45 based on the flow volume of LNG as described above may be carried out manually or may be carried out automatically by a controller and the like based on the flow volume of the supplied LNG.

According to the invention, the interconnecting tube 44 is provided so as to connect the delivery side manifold 19 of the other vaporizing tube block 11B (see Fig. 1) with the delivery side manifold 19 of the specific vaporizing tube block 11A. In this case, the on-off valve 45 is provided in the collecting tube 14 between the delivery side connection 14a and the specific vaporizing tube block 11A (or the other vaporizing tube block 11B).

Even if the on-off valve 45 and the interconnecting tube 44 are provided at such locations, by closing the on-off valve 45, the propagation of pressure pulsation between the vaporizing tube blocks 11 can be effectively suppressed in at least one of the interconnecting tube 44 that connects the supply side manifolds 17 or the interconnecting tube 44 that connects the delivery side manifolds 19.

Furthermore, the vaporizer of the present invention is not limited to the above-mentioned embodiments, but rather various modifications can naturally be added within a range that does not deviate from the gist of the present invention.

Although the diaphragms 23, 25, 18, 20, 13 and 15 are provided at all connections consisting of the connections between the vaporizing tubes 21 and the headers 22 (or headers 24), the connections between the headers 22 (or the headers 24) and the manifolds 17 (or the manifolds 19), and the connections between the manifolds 17 (or the manifolds 19) and the dispensing tube 12 (or the collecting tube 14) in the first embodiment, the arranged locations of the diaphragms are not limited thereto, but rather are at least only required to be arranged so as to be able to suppress the transmission of pressure pulsation between the vaporizing tube blocks 11, and increases in amplitude of pressure pulsation occurring in the individual vaporizing tube blocks 11 that have a considerable effect on vibration of the vaporizer 10 and the like. Thus, the inter-block diaphragms 13 (or 15) are at least required to be provided in the vaporizer 10.

The location where the variable valve 40 is provided in the second embodiment is not limited to the dispensing tube 12A or the collecting tube 14. The variable valve 40 may also be provided between the manifolds 17 and 19 and the headers 22 and 24, or may be provided between the headers 22 and 24 and the vaporizing tubes 21.

### Industrial Applicability

As has been described above, the vaporizer for low-temperature liquefied gas according to the present invention is useful as a vaporizer for vaporizing a low-temperature liquefied gas such as liquefied natural gas (LNG), liquefied petroleum gas (LPG) or liquid nitrogen (LN₂) by exchanging heat with a heat transfer medium such as seawater, and a vaporizer for low-temperature liquefied gas can be provided that is capable of effectively suppressing the propagation of vibrations generated in each of the vaporizing tubes thereof caused by vaporization of low-temperature liquefied gas without causing an accompanying increase in thermal stress.

## Claims

1. A vaporizer (10) for low-temperature liquefied gas, comprising:
a plurality of vaporizing tube blocks (11) each having a plurality of vaporizing tube panels (16) in which a plurality of vaporizing tubes (21) for vaporizing a low-temperature liquefied gas flowing therethrough by exchanging heat with the outside is arranged in a vertical plane, each of the vaporizing tube panels (16) being arranged in a direction perpendicular to the vertical plane;
an inter-block dispensing tube (12) that is connected to each of the vaporizing tube blocks (11) and dispenses the low-temperature liquefied gas to each of the vaporizing tube blocks (11);
an inter-block collecting tube (14) that is connected to each of the vaporizing tube blocks (11) and collects and sends out the low-temperature liquefied gas vaporized in the vaporizing tube block (11); and
an inter-block diaphragm (13, 15) that suppresses propagation of pressure pulsation between vaporizing tube blocks (11) mutually connected by the inter-block dispensing tube (12) and the inter-block collecting tube (14), wherein
said inter-block diaphragm (13, 15) is respectively provided in the inter-block collecting tube (14) and the inter-block dispensing tube (12), and locally reduces a cross-sectional area of a flow path of the low-temperature liquefied gas within that tube (12, 14),
**characterized in that**
a flow path cross-sectional area of the inter-block diaphragm (15) provided in the inter-block collecting tube (14) is larger than a flow path cross-sectional area of the inter-block diaphragm (13) provided in the inter-block dispensing tube (12).

2. The vaporizer for low-temperature liquefied gas according to claim 1, wherein
the inter-block diaphragm is a variable valve that is able to change a flow path cross-sectional area in the inter-block diaphragm.

3. A vaporizer (10) for low-temperature liquefied gas, comprising:
a plurality of vaporizing tube blocks (11) each having a plurality of vaporizing tube panels (16) in which a plurality of vaporizing tubes (21) for vaporizing a low-temperature liquefied gas flowing therethrough by exchanging heat with the outside is arranged in a vertical plane, each of the vaporizing tube panels (16) being arranged in a direction perpendicular to the vertical plane;
an inter-block dispensing tube (12) that is connected to each of the vaporizing tube blocks (11) and dispenses the low-temperature liquefied gas to each of the vaporizing tube blocks (11);
an inter-block collecting tube (14) that is connected to each of the vaporizing tube blocks (11) and collects and sends out the low-temperature liquefied gas vaporized in the vaporizing tube block (11);
an inter-panel dispensing tube (17), which is connected to each of the vaporizing tube panels (16) contained in a common vaporizing tube block (11) and is connected to the inter-block dispensing tube (12), and dispenses the low-temperature liquefied gas from the inter-block dispensing tube (12) to each of the vaporizing tube panels (16);
an inter-panel collecting tube (19), which is connected to each of the vaporizing tube panels (16) contained in the common vaporizing tube block (11) and is connected to the inter-block collecting tube (14), and collects the low-temperature liquefied gas vaporized in the vaporizing tube panel (16) and sends out the gas to the inter-block collecting tube (14); and
an inter-block pulsation suppression unit (13, 15) that suppresses propagation of pressure pulsation between vaporizing tube blocks (11) mutually connected by the inter-block dispensing tube (12) and the inter-block collecting tube (14),
**characterized by**
an inter-panel diaphragm (18, 20) that suppresses propagation of pressure pulsation between vaporizing tube panels (16) mutually connected by the inter-panel dispensing tube (17) and the inter-panel collecting tube (19), said inter-panel diaphragm (18, 20) being provided in the inter-panel collecting tube (19) and optionally the inter-panel dispensing tube (17), and locally reducing a cross-sectional area of a flow path of the low-temperature liquefied gas within that tube (17, 19).

4. The vaporizer (10) for low-temperature liquefied gas according to claim 3, wherein
the inter-panel diaphragm (18, 20) is respectively provided in the inter-panel dispensing tube (17) and the inter-panel collecting tube (19), and
a flow path cross-sectional area of the inter-panel diaphragm (20) provided in the inter-panel collecting tube (19) is larger than a flow path cross-sectional area of the inter-panel diaphragm (18) provided in the inter-panel dispensing tube (17).

5. A vaporizer (10) for low-temperature liquefied gas, comprising:
a plurality of vaporizing tube blocks (11) each having a plurality of vaporizing tube panels (16) in which a plurality of vaporizing tubes (21) for vaporizing a low-temperature liquefied gas flowing therethrough by exchanging heat with the outside is arranged in a vertical plane, each of the vaporizing tube panels (16) being arranged in a direction perpendicular to the vertical plane;
an inter-block dispensing tube (12) that is connected to each of the vaporizing tube blocks (11) and dispenses the low-temperature liquefied gas to each of the vaporizing tube blocks (11);
an inter-block collecting tube (14) that is connected to each of the vaporizing tube blocks (11) and collects and sends out the low-temperature liquefied gas vaporized in the vaporizing tube block (11);
inter-vaporizing tube dispensing tubes (22), which are connected to each of the vaporizing tubes (21) contained in a common vaporizing tube panel (16), and dispense the low-temperature liquefied gas to each of the vaporizing tubes (21);
inter-vaporizing tube collecting tubes (24), which are connected to each of the vaporizing tubes (21) contained in the vaporizing tube panel (16), and collect and send out the low-temperature liquefied gas vaporized in the vaporizing tube (21);
an inter-panel dispensing tube (17), which is connected to each of the inter-vaporizing tube dispensing tubes (22) contained in a common vaporizing tube block (16) and is connected to the inter-block dispensing tube (12), and dispenses the low-temperature liquefied gas from the inter-block dispensing tube (12) to each of the inter-vaporizing tube dispensing tubes (22);
an inter-panel collecting tube (19), which is connected to each of the inter-vaporizing tube collecting tubes (24) contained in the common vaporizing tube block (16) and is connected to the inter-block collecting tube (14), and sends out vaporized low-temperature liquefied gas collected from each of the inter-vaporizing tube collecting tubes (24) to the inter-block collecting tube (14); and
an inter-block pulsation suppression unit (13, 15) that suppresses propagation of pressure pulsation between vaporizing tube blocks (11) mutually connected by the inter-block dispensing tube (12) and the inter-block collecting tube (14),
**characterized by**
an inter-vaporizing tube diaphragm (23, 25) that suppresses propagation of pressure pulsation between vaporizing tubes (21) mutually connected by the inter-vaporizing tube dispensing tubes (22) and the inter-vaporizing tube collecting tubes (24), said inter-vaporizing tube diaphragm (23, 25) being provided in the inter-vaporizing tube collecting tubes (24) and optionally the inter-vaporizing tube dispensing tubes (22), and locally reducing a cross-sectional area of a flow path of the low-temperature liquefied gas within those tubes.

6. The vaporizer (10) for low-temperature liquefied gas according to claim 5, further comprising:
an inter-panel pulsation suppression unit (18, 20) that suppresses propagation of pressure pulsation between vaporizing tube panels (16) mutually connected by the inter-panel dispensing tube (17) and the inter-panel collecting tube (19).

7. The vaporizer for low-temperature liquefied gas according to claim 5 or 6, wherein
the inter-vaporizing tube diaphragm (23, 25) is respectively provided in the inter-vaporizing tube dispensing tubes (22) and the inter-vaporizing tube collecting tubes (24), and
a flow path cross-sectional area of the inter-vaporizing tube diaphragm (25) provided in the inter-vaporizing tube collecting tubes (24) is larger than a flow path cross-sectional area of the inter-vaporizing tube diaphragm (23) provided in the inter-vaporizing tube dispensing tubes (22).

8. A vaporizer for low-temperature liquefied gas, comprising:
a plurality of vaporizing tube blocks (11) each having a plurality of vaporizing tube panels (16) in which a plurality of vaporizing tubes (21) for vaporizing a low-temperature liquefied gas flowing therethrough by exchanging heat with the outside is arranged in a vertical plane, each of the vaporizing tube panels (16) being arranged in a direction perpendicular to the vertical plane;
an inter-block dispensing tube (12) that is connected to each of the vaporizing tube blocks (11) and dispenses the low-temperature liquefied gas to each of the vaporizing tube blocks (11);
an inter-block collecting tube (14) that is connected to each of the vaporizing tube blocks (11) and collects and sends out the low-temperature liquefied gas vaporized in the vaporizing tube block (11); and
an inter-block pulsation suppression unit that suppresses propagation of pressure pulsation between vaporizing tube blocks (11) mutually connected by the inter-block dispensing tube (12) and the inter-block collecting tube (14),
wherein the inter-block pulsation suppression unit has an on-off valve (41), which is provided in the inter-block collecting tube (14),
**characterized in that** the on-off valve (41) opens and closes the flow path of the vaporized low-temperature liquefied gas from a specific vaporizing tube block (11) in the inter-block collecting tube (14), wherein the inter-block pulsation suppression unit further comprises a bypass tube (42), which bypasses the on-off valve (41) from the specific vaporizing tube block (11) and forms a flow path of the vaporized low-temperature liquefied gas that merges with the inter-block collecting tube (14) downstream from the on-off valve (41), and
the bypass tube (42) is provided with a bypass diaphragm (43) that locally reduces a cross-sectional area of the flow path of the low-temperature liquefied gas formed in the tube.

9. A vaporizer for low-temperature liquefied gas, comprising:
a plurality of vaporizing tube blocks (11) each having a plurality of vaporizing tube panels (16) in which a plurality of vaporizing tubes (21) for vaporizing a low-temperature liquefied gas flowing therethrough by exchanging heat with the outside is arranged in a vertical plane, each of the vaporizing tube panels (16) being arranged in a direction perpendicular to the vertical plane;
an inter-block dispensing tube (12) that is connected to each of the vaporizing tube blocks (11) and dispenses the low-temperature liquefied gas to each of the vaporizing tube blocks (11);
an inter-block collecting tube (14) that is connected to each of the vaporizing tube blocks (11) and collects and sends out the low-temperature liquefied gas vaporized in the vaporizing tube block (11); and
an inter-block pulsation suppression unit that suppresses propagation of pressure pulsation between vaporizing tube blocks (11) mutually connected by the inter-block dispensing tube (12) and the inter-block collecting tube (14), wherein
each of the vaporizing tube blocks (11) is provided with an inter-panel collecting tube (19), which is connected to each of the vaporizing tube panels (16) contained in the vaporizing tube block (11) and is connected to the inter-block collecting tube (14), and collects the liquefied gas vaporized in each of the vaporizing tube panels (16) and sends out the gas to the inter-block collecting tube (14),
wherein the inter-block pulsation suppression unit has an on-off valve (45), which is provided in the inter-block collecting tube (14),
**characterized in that** the on-off valve (45) opens and closes the flow path of the vaporized low-temperature liquefied gas from a specific vaporizing tube block (11) in the inter-block collecting tube (14), wherein the inter-block pulsation suppression unit further comprises a delivery side interconnecting tube (44) that connects the inter-panel collecting tube (19) of the specific vaporizing tube block (11) with the inter-panel collecting tube (19) of another vaporizing tube block (11), and
the delivery side interconnecting tube (44) is provided with a delivery side interconnecting tube diaphragm (46) that locally reduces a cross-sectional area of the flow path of the low-temperature liquefied gas formed in the tube.

## Patentansprüche

1. Verdampfer (10) für Niedertemperaturflüssiggas, mit:
einer Vielzahl von Verdampfungsrohrblöcken (11), die jeweils eine Vielzahl von Verdampfungsrohrpaneelen (16) haben, in denen in einer vertikalen Ebene eine Vielzahl von Verdampfungsrohren (21) zum Verdampfen eines durch sie hindurchströmenden Niedertemperaturflüssiggases durch Wärmetausch mit der Außenseite angeordnet ist, wobei jedes der Verdampfungsrohrpaneele (16) in einer Richtung senkrecht zur vertikalen Ebene angeordnet ist;
einem Zwischenblock-Abgaberohr (12), das mit jedem der Verdampfungsrohrblöcke (11) verbunden ist und das Niedertemperaturflüssiggas an jeden der Verdampfungsrohrblöcke (11) abgibt;
einem Zwischenblock-Sammelrohr (14), das mit jedem der Verdampfungsrohrblöcke (11) verbunden ist und das im Verdampfungsrohrblock (11) verdampfte Niedertemperaturflüssiggas sammelt und aussendet; und
einer Zwischenblock-Blende (13, 15), die eine Ausbreitung einer Druckpulsation zwischen Verdampfungsrohrblöcken (11) unterdrückt, die gegenseitig durch das Zwischenblock-Abgaberohr (12) und das Zwischenblock-Sammelrohr (14) verbunden sind, wobei
die Zwischenblock-Blende (13, 15) jeweils in dem Zwischenblock-Sammelrohr (14) und dem Zwischenblock-Abgaberohr (12) vorgesehen ist und innerhalb dieses Rohrs (12, 14) lokal eine Querschnittsfläche eines Strömungswegs des Niedertemperaturflüssiggases reduziert,
**dadurch gekennzeichnet, dass**
eine Strömungswegquerschnittsfläche der in dem Zwischenblock-Sammelrohr (14) vorgesehenen Zwischenblock-Blende (15) größer als eine Strömungsquerschnittsfläche der in dem Zwischenblock-Abgaberohr (12) vorgesehenen Zwischenblock-Blende (13) ist.

2. Verdampfer für Niedertemperaturflüssiggas nach Anspruch 1, wobei
die Zwischenblock-Blende ein variables Ventil ist, das dazu imstande ist, in der Zwischenblock-Blende eine Strömungswegquerschnittsfläche zu ändern.

3. Verdampfer (10) für Niedertemperaturflüssiggas, mit:
einer Vielzahl von Verdampfungsrohrblöcken (11), die jeweils eine Vielzahl von Verdampfungsrohrpaneelen (16) haben, in denen in einer vertikalen Ebene eine Vielzahl von Verdampfungsrohren (21) zum Verdampfen eines durch sie hindurchströmenden Niedertemperaturflüssiggases durch Wärmetausch mit der Außenseite angeordnet ist, wobei jedes der Verdampfungsrohrpaneele (16) in einer Richtung senkrecht zur vertikalen Ebene angeordnet ist;
einem Zwischenblock-Abgaberohr (12), das mit jedem der Verdampfungsrohrblöcke (11) verbunden ist und das Niedertemperaturflüssiggas an jeden der Verdampfungsrohrblöcke (11) abgibt;
einem Zwischenblock-Sammelrohr (14), das mit jedem der Verdampfungsrohrblöcke (11) verbunden ist und das im Verdampfungsrohrblock (11) verdampfte Niedertemperaturflüssiggas sammelt und aussendet;
einem Zwischenpaneel-Abgaberohr (17), das mit jedem der in einem gemeinsamen Verdampfungsrohrblock (11) enthaltenen Verdampfungsrohrpaneele (16) und dem Zwischenblock-Abgaberohr (12) verbunden ist und das Niedertemperaturflüssiggas aus dem Zwischenblock-Abgaberohr (12) an jedes der Verdampfungsrohrpaneele (16) abgibt;
einem Zwischenpaneel-Sammelrohr (19), das mit jedem der in dem gemeinsamen Verdampfungsrohrblock (11) enthaltenen Verdampfungsrohrpaneele (16) und dem Zwischenblock-Sammelrohr (14) verbunden ist und das im Verdampfungsrohrpaneel (16) verdampfte Niedertemperaturflüssiggas sammelt und das Gas zum Zwischenblock-Sammelrohr (14) aussendet; und
einer Zwischenblock-Pulsationsunterdrückungseinheit (13, 15), die eine Ausbreitung einer Druckpulsation zwischen Verdampfungsrohrblöcken (11) unterdrückt, die gegenseitig durch das Zwischenblock-Abgaberohr (12) und das Zwischenblock-Sammelrohr (14) verbunden sind,
**gekennzeichnet durch**
eine Zwischenpaneel-Blende (18, 20), die eine Ausbreitung einer Druckpulsation zwischen Verdampfungsrohrpaneelen (16) unterdrückt, die gegenseitig durch die Zwischenpaneel-Abgaberohr (17) und die Zwischenpaneel-Sammelrohr (19) verbunden sind, wobei die Zwischenpaneel-Blende (18, 20) in dem Zwischenpaneel-Sammelrohr (19) und optional dem Zwischenpaneel-Abgaberohr (17) vorgesehen ist und innerhalb dieses Rohrs (17, 19) lokal eine Querschnittsfläche eines Strömungswegs des Niedertemperaturflüssiggases reduziert.

4. Verdampfer (10) für Niedertemperaturflüssiggas nach Anspruch 3, wobei
die Zwischenpaneel-Blende (18, 20) jeweils in dem Zwischenpaneel-Abgaberohr (17) und dem Zwischenpaneel-Sammelrohr (19) vorgesehen ist und
eine Strömungswegquerschnittsfläche der in dem Zwischenpaneel-Sammelrohr (19) vorgesehenen Zwischenpaneel-Blende (20) größer als eine Strömungswegquerschnittsfläche der in dem Zwischenpaneel-Abgaberohr (17) vorgesehenen Zwischenpaneel-Blende (18) ist.

5. Verdampfer (10) für Niedertemperaturflüssiggas, mit:
einer Vielzahl von Verdampfungsrohrblöcken (11), die jeweils eine Vielzahl von Verdampfungsrohrpaneelen (16) haben, in denen in einer vertikalen Ebene eine Vielzahl von Verdampfungsrohren (21) zum Verdampfen eines durch sie hindurchströmenden Niedertemperaturflüssiggases durch Wärmetausch mit der Außenseite angeordnet ist, wobei jedes der Verdampfungsrohrpaneele (16) in einer Richtung senkrecht zur vertikalen Ebene angeordnet ist;
einem Zwischenblock-Abgaberohr (12), das mit jedem der Verdampfungsrohrblöcke (11) verbunden ist und das Niedertemperaturflüssiggas an jeden der Verdampfungsrohrblöcke (11) abgibt;
einem Zwischenblock-Sammelrohr (14), das mit jedem der Verdampfungsrohrblöcke (11) verbunden ist und das im Verdampfungsrohrblock (11) verdampfte Niedertemperaturflüssiggas sammelt und aussendet;
Zwischenverdampfungsrohr-Abgaberohren (22), die mit jedem der in einem gemeinsamen Verdampfungsrohrpaneel (16) enthaltenen Verdampfungsrohre (21) verbunden sind und das Niedertemperaturflüssiggas an jedes der Verdampfungsrohre (21) abgeben;
Zwischenverdampfungsrohr-Sammelrohren (24), die mit jedem der in dem Verdampfungsrohrpaneel (16) enthaltenen Verdampfungsrohre (21) verbunden sind und das in der Verdampfungsröhre (21) verdampfte Niedertemperaturflüssiggas sammeln und aussenden;
einem Zwischenpaneel-Abgaberohr (17), das mit jedem der in einem gemeinsamen Verdampfungsrohrblock (16) enthaltenen Zwischenverdampfungsrohr-Abgaberohre (22) und dem Zwischenblock-Abgaberohr (12) verbunden ist und das Niedertemperaturflüssiggas aus dem Zwischenblock-Abgaberohr (12) an jedes der Zwischenverdampfungsrohr-Abgaberohre (22) abgibt;
einem Zwischenpaneel-Sammelrohr (19), das mit jedem der in dem gemeinsamen Verdampfungsrohrblock (16) enthaltenen Zwischenverdampfungsrohr-Sammelrohre (24) und dem Zwischenblock-Sammelrohr (14) verbunden ist und verdampftes Niedertemperaturflüssiggas, das von jedem der Zwischenverdampfungsrohr-Sammelrohre (24) gesammelt wurde, an das Zwischenblock-Sammelrohr (14) aussendet; und
einer Zwischenblock-Pulsationsunterdrückungseinheit (13, 15), die eine Ausbreitung einer Druckpulsation zwischen Verdampfungsrohrblöcken (11) unterdrückt, die gegenseitig durch das Zwischenblock-Abgaberohr (12) und das Zwischenblock-Sammelrohr (14) verbunden sind,
**gekennzeichnet durch**
eine Zwischenverdampfungsrohr-Blende (23, 25), die eine Ausbreitung einer Druckpulsation zwischen Verdampfungsrohren (21) unterdrückt, die gegenseitig durch die Zwischenverdampfungsrohr-Abgaberohre (22) und die Zwischenverdampfungsrohr-Sammelrohre (24) verbunden sind, wobei die Zwischenverdampfungsrohr-Blende (23, 25) in den Zwischenverdampfungsrohr-Sammelrohren (24) und optional den Zwischenverdampfungsrohr-Abgaberohren (22) vorgesehen ist und innerhalb dieser Rohre lokal eine Querschnittsfläche eines Strömungswegs des Niedertemperaturflüssiggases reduziert.

6. Verdampfer (10) für Niedertemperaturflüssiggas nach Anspruch 5, mit außerdem:
einer Zwischenpaneel-Pulsationsunterdrückungseinheit (18, 20), die eine Ausbreitung einer Druckpulsation zwischen Verdampfungsrohrpaneelen (16) unterdrückt, die gegenseitig durch das Zwischenpaneel-Abgaberohr (17) und das Zwischenpaneel-Sammelrohr (19) verbunden sind.

7. Verdampfer für Niedertemperaturflüssiggas nach Anspruch 5 oder 6, wobei
die Zwischenverdampfungsrohr-Blende (23, 25) jeweils in den Zwischenverdampfungsrohr-Abgaberohren (22) und den Zwischenverdampfungsrohr-Sammelrohren (24) vorgesehen ist und
eine Strömungswegquerschnittsfläche der in den Zwischenverdampfungsrohr-Sammelrohren (24) vorgesehenen Zwischenverdampfungsrohr-Blende (25) größer als eine Strömungswegquerschnittsfläche der in den Zwischenverdampfungsrohr-Abgaberohren (22) vorgesehenen Zwischenverdampfungsrohr-Blende (23) ist.

8. Verdampfer für Niedertemperaturflüssiggas, mit:
einer Vielzahl von Verdampfungsrohrblöcken (11), die jeweils eine Vielzahl von Verdampfungsrohrpaneelen (16) haben, in denen in einer vertikalen Ebene eine Vielzahl von Verdampfungsrohren (21) zum Verdampfen eines durch sie hindurchströmenden Niedertemperaturflüssiggases durch Wärmetausch mit der Außenseite angeordnet ist, wobei jedes der Verdampfungsrohrpaneele (16) in einer Richtung senkrecht zur vertikalen Ebene angeordnet ist;
einem Zwischenblock-Abgaberohr (12), das mit jedem der Verdampfungsrohrblöcke (11) verbunden ist und das Niedertemperaturflüssiggas an jeden der Verdampfungsrohrblöcke (11) abgibt;
einem Zwischenblock-Sammelrohr (14), das mit jedem der Verdampfungsrohrblöcke (11) verbunden ist und das im Verdampfungsrohrblock (11) verdampfte Niedertemperaturflüssiggas sammelt und aussendet; und
einer Zwischenblock-Pulsationsunterdrückungseinheit, die eine Ausbreitung einer Druckpulsation zwischen Verdampfungsrohrblöcken (11) unterdrückt, die gegenseitig durch das Zwischenblock-Abgaberohr (12) und das Zwischenblock-Sammelrohr (14) verbunden sind,
wobei die Zwischenblock-Pulsationsunterdrückungseinheit ein Auf-Zu-Ventil (41) hat, das in dem Zwischenblock-Sammelrohr (14) vorgesehen ist,
**dadurch gekennzeichnet, dass**
das Auf-Zu-Ventil (41) in dem Zwischenblock-Sammelrohr (14) den Strömungsweg des verdampften Niedertemperaturflüssiggases aus einem bestimmten Verdampfungsrohrblock (11) öffnet und schließt,
wobei die Zwischenblock-Pulsationsunterdrückungseinheit außerdem ein Umgehungsrohr (42) umfasst, das das Auf-Zu-Ventil (41) von dem bestimmten Verdampfungsrohrblock (11) aus umgeht und einen Strömungsweg des verdampften Niedertemperaturflüssiggases ausbildet, der stromabwärts von dem Auf-Zu-Ventil (41) mit dem Zwischenblock-Sammelrohr (14) zusammenläuft, und
das Umgehungsrohr (42) mit einer Umgehungsblende (53) versehen ist, die lokal eine Querschnittsfläche des in dem Rohr ausgebildeten Strömungswegs des Niedertemperaturflüssiggases reduziert.

9. Verdampfer für Niedertemperaturflüssiggas, mit:
einer Vielzahl von Verdampfungsrohrblöcken (11), die jeweils eine Vielzahl von Verdampfungsrohrpaneelen (16) haben, in denen in einer vertikalen Ebene eine Vielzahl von Verdampfungsrohren (21) zum Verdampfen eines durch sie hindurchströmenden Niedertemperaturflüssiggases durch Wärmetausch mit der Außenseite angeordnet ist, wobei jedes der Verdampfungsrohrpaneele (16) in einer Richtung senkrecht zur vertikalen Ebene angeordnet ist;
einem Zwischenblock-Abgaberohr (12), das mit jedem der Verdampfungsrohrblöcke (11) verbunden ist und das Niedertemperaturflüssiggas an jeden der Verdampfungsrohrblöcke (11) abgibt;
einem Zwischenblock-Sammelrohr (14), das mit jedem der Verdampfungsrohrblöcke (11) verbunden ist und das im Verdampfungsrohrblock (11) verdampfte Niedertemperaturflüssiggas sammelt und aussendet; und
einer Zwischenblock-Pulsationsunterdrückungseinheit, die eine Ausbreitung einer Druckpulsation zwischen Verdampfungsrohrblöcken (11) unterdrückt, die gegenseitig durch das Zwischenblock-Abgaberohr (12) und das Zwischenblock-Sammelrohr (14) verbunden sind, wobei
jeder der Verdampfungsrohrblöcke (11) mit einem Zwischenpaneel-Sammelrohr (19) versehen ist, das mit jedem der in dem Verdampfungsrohrblock (11) enthaltenen Verdampfungsrohrpaneele (16) und dem Zwischenblock-Sammelrohr (14) verbunden ist und das in jedem der Verdampfungsrohrpaneele (16) verdampfte Flüssiggas sammelt und das Gas zum Zwischenblock-Sammelrohr (14) aussendet,
wobei die Zwischenblock-Pulsationsunterdrückungseinheit ein Auf-Zu-Ventil (45) hat, das in dem Zwischenblock-Sammelrohr (14) vorgesehen ist,
**dadurch gekennzeichnet, dass**
das Auf-Zu-Ventil (45) in dem Zwischenblock-Sammelrohr (14) den Strömungsweg des verdampften Niedertemperaturflüssiggases aus einem bestimmten Verdampfungsrohrblock (11) öffnet und schließt,
wobei die Zwischenblock-Pulsationsunterdrückungseinheit außerdem ein zufuhrseitiges Verbindungsrohr (44) umfasst, das das Zwischenpaneel-Sammelrohr (19) des bestimmten Verdampfungsrohrblocks (11) mit dem Zwischenpaneel-Sammelrohr (19) eines anderen Verdampfungsrohrblocks (11) verbindet, und
das zufuhrseitige Verbindungsrohr (44) mit einer zufuhrseitigen Verbindungsrohr-Blende (46) versehen ist, die lokal eine Querschnittsfläche des in dem Rohr ausgebildeten Strömungswegs des Niedertemperaturflüssiggases reduziert.

## Revendications

1. Vaporisateur (10) pour gaz liquéfié basse température comprenant :
une pluralité de blocs de tube de vaporisation (11) ayant chacun une pluralité de panneaux de tubes de vaporisation (16) dans lesquels une pluralité de tubes de vaporisation (21) pour vaporiser un gaz liquéfié basse température s'écoulant à travers ces derniers en échangeant la chaleur avec l'extérieur, est agencée dans un plan vertical, chacun des panneaux de tubes de vaporisation (16) étant agencé dans une direction perpendiculaire au plan vertical ;
un tube de distribution entre les blocs (12) qui est raccordé à chacun des blocs de tube de vaporisation (11) et distribue la gaz liquéfié basse température à chacun des blocs de tube de vaporisation (11) ;
un tube de collecte entre les blocs (14) qui est raccordé à chacun des blocs de tube de vaporisation (11) et collecte et envoie le gaz liquéfié basse température vaporisé dans le bloc de tube de vaporisation (11) ; et
un diaphragme entre les blocs (13, 15) qui supprime la propagation de pulsation de pression entre les blocs de tube de vaporisation (11) mutuellement raccordés par le tube de distribution entre les blocs (12) et le tube de collecte entre les blocs (14), dans lequel :
ledit diaphragme entre les blocs (13, 15) est respectivement prévu dans le tube de collecte entre les blocs (14) et le tube de distribution entre les blocs (12) et réduit localement une surface transversale d'une trajectoire d'écoulement du gaz liquéfié basse température dans ce tube (12, 14),
**caractérisé en ce que** :
une surface transversale de trajectoire d'écoulement du diaphragme entre les blocs (15) prévue dans le tube de collecte entre les blocs (14) est supérieure à une surface transversale de trajectoire d'écoulement du diaphragme entre les blocs (13) prévue dans le tube de distribution entre les blocs (12).

2. Vaporisateur pour gaz liquéfié basse température selon la revendication 1, dans lequel :
le diaphragme entre les blocs est une valve variable qui peut modifier une surface transversale de trajectoire d'écoulement dans le diaphragme entre les blocs.

3. Vaporisateur (10) pour gaz liquéfié basse température, comprenant :
une pluralité de blocs de tube de vaporisation (11) ayant chacun une pluralité de panneaux de tubes de vaporisation (16) dans lesquels une pluralité de tubes de vaporisation (21) pour vaporiser un gaz liquéfié basse température s'écoulant à travers ces derniers en échangeant la chaleur avec l'extérieur, est agencée dans un plan vertical, chacun des panneaux de tubes de vaporisation (16) étant agencé dans une direction perpendiculaire au plan vertical ;
un tube de distribution entre les blocs (12) qui est raccordé à chacun des blocs de tube de vaporisation (11) et distribue le gaz liquéfié basse température à chacun des blocs de tube de vaporisation (11) ;
un tube de collecte entre les blocs (14) qui est raccordé à chacun des blocs de tube de vaporisation (11) et collecte et envoie le gaz liquéfié basse température vaporisé dans le bloc de tube de vaporisation (11) ;
un tube de distribution entre les panneaux (17) qui est raccordé à chacun des panneaux de tubes de vaporisation (16) contenus dans un bloc de tube de vaporisation (11) commun et est raccordé au tube de distribution entre les blocs (12), et distribue le gaz liquéfié basse température du tube de distribution entre les blocs (12) à chacun des panneaux de tubes de vaporisation (16) ;
un tube de collecte entre les panneaux (19) qui est raccordé à chacun des panneaux de tubes de vaporisation (16) contenus dans le bloc de tube de vaporisation (11) commun et est raccordé au tube de collecte entre les blocs (14) et collecte le gaz liquéfié basse température vaporisé dans le panneau de tubes de vaporisation (16) et envoie le gaz vers le tube de collecte entre les blocs (14) ; et
une unité de suppression de pulsation entre les blocs (13, 15) qui supprime la propagation de pulsation de pression entre les blocs de tube de vaporisation (11) mutuellement raccordés par le tube de distribution entre les blocs (12) et le tube de collecte entre les blocs (14),
**caractérisé par** :
un diaphragme entre les panneaux (18, 20) qui supprime la propagation de pulsation de pression entre les panneaux de tubes de vaporisation (16) mutuellement raccordés par le tube de distribution entre les panneaux (17) et le tube de collecte entre les panneaux (19), ledit diaphragme entre les panneaux (18, 20) étant prévu dans le tube de collecte entre les panneaux (19) et facultativement le tube de distribution entre les panneaux (17) et réduisant localement une surface transversale d'une trajectoire d'écoulement du gaz liquéfié basse température dans ce tube (17, 19).

4. Vaporisateur (10) pour gaz liquéfié basse température selon la revendication 3, dans lequel :
le diaphragme entre les panneaux (18, 20) est respectivement prévu dans le tube de distribution entre les panneaux (17) et le tube de collecte entre les panneaux (19), et
une surface transversale de trajectoire d'écoulement du diaphragme entre les panneaux (20) prévue dans le tube de collecte entre les panneaux (19) est supérieure à une surface transversale de trajectoire d'écoulement du diaphragme entre les panneaux (18) prévue dans le tube de distribution entre les panneaux (17).

5. Vaporisateur (10) pour gaz liquéfié basse température comprenant :
une pluralité de blocs de tube de vaporisation (11) ayant chacun une pluralité de panneaux de tubes de vaporisation (16) dans lesquels une pluralité de tubes de vaporisation (21) pour vaporiser un gaz liquéfié basse température s'écoulant à travers ces derniers en échangeant la chaleur avec l'extérieur, est agencée dans un plan vertical, chacun des panneaux de tubes de vaporisation (16) étant agencé dans une direction perpendiculaire au plan vertical ;
un tube de distribution entre les blocs (12) qui est raccordé à chacun des blocs de tube de vaporisation (11) et distribue le gaz liquéfié basse température à chacun des blocs de tube de vaporisation (11) ;
un tube de collecte entre les blocs (14) qui est raccordé à chacun des blocs de tube de vaporisation (11) et collecte et envoie le gaz liquéfié basse température vaporisé dans le bloc de tube de vaporisation (11) ;
des tubes de distribution entre les tubes de vaporisation (22) qui sont raccordés à chacun des tubes de vaporisation (21) contenus dans un panneau de tubes de vaporisation (16) commun, et distribuent le gaz liquéfié basse température à chacun des tubes de vaporisation (21) ;
des tubes de collecte entre les tubes de vaporisation (24) qui sont raccordés à chacun des tubes de vaporisation (21) contenus dans le panneau de tubes de vaporisation (16) et collectent et envoient le gaz liquéfié basse température vaporisé dans le tube de vaporisation (21) ;
un tube de distribution entre les panneaux (17) qui est raccordé à chacun des tubes de distribution entre les tubes de vaporisation (22) contenus dans un bloc de tube de vaporisation (16) commun et est raccordé au tube de distribution entre les blocs (12) et distribue le gaz liquéfié basse température du tube de distribution entre les blocs (12) à chacun des tubes de distribution entre les tubes de vaporisation (22) ;
un tube de collecte entre les panneaux (19) qui est raccordé à chacun des tubes de collecte entre les tubes de vaporisations (24) contenus dans le bloc de tube de vaporisation (16) commun et est raccordé au tube de collecte entre les blocs (14) et envoie le gaz liquéfié basse température collecté à partir de chacun des tubes de collecte entre les tubes de vaporisation (24) jusqu'au tube de collecte entre les blocs (14) ; et
une unité de suppression de pulsation entre les blocs (13, 15) qui supprime la propagation de pulsation de pression entre les blocs de tube de vaporisation (11) mutuellement raccordés par le tube de distribution entre les blocs (12) et le tube de collecte entre les blocs (14),
**caractérisé par** :
un diaphragme entre les tubes de vaporisation (23, 25) qui supprime la propagation de pulsation de pression entre les tubes de vaporisation (21) mutuellement raccordés par les tubes de distribution entre les tubes de vaporisation (22) et les tubes de collecte entre les tubes de vaporisation (24), ledit diaphragme entre les tubes de vaporisation (23, 25) étant prévu dans les tubes de collecte entre les tubes de vaporisation (24) et facultativement les tubes de distribution entre les tubes de vaporisation (22), et réduisant localement une surface transversale d'une trajectoire d'écoulement du gaz liquéfié basse température dans ces tubes.

6. Vaporisateur (10) pour gaz liquéfié basse température selon la revendication 5, comprenant en outre :
une unité de suppression de pulsation entre les panneaux (18, 20) qui supprime la propagation de pulsation de pression entre les panneaux de tubes de vaporisation (16) mutuellement raccordés par le tube de distribution entre les panneaux (17) et le tube de collecte entre les panneaux (19).

7. Vaporisateur pour gaz liquéfié basse température selon la revendication 5 ou 6, dans lequel :
le diaphragme entre les tubes de vaporisation (23, 25) est respectivement prévu dans les tubes de distribution entre les tubes de vaporisation (22) et les tubes de collecte entre les tubes de vaporisation (24), et
une surface transversale de trajectoire d'écoulement du diaphragme entre les tubes de vaporisation (25) prévue dans les tubes de collecte entre les tubes de vaporisation (24) est supérieure à une surface transversale de trajectoire d'écoulement du diaphragme entre les tubes de vaporisation (23) prévue dans les tubes de distribution entre les tubes de vaporisation (22).

8. Vaporisateur pour gaz liquéfié basse température comprenant :
une pluralité de blocs de tube de vaporisation (11) ayant chacun une pluralité de panneaux de tubes de vaporisation (16) dans lesquels une pluralité de tubes de vaporisation (21) pour vaporiser un gaz liquéfié basse température s'écoulant à travers ces derniers en échangeant la chaleur avec l'extérieur, est agencée dans un plan vertical, chacun des panneaux de tubes de vaporisation (16) étant agencé dans une direction perpendiculaire au plan vertical ;
un tube de distribution entre les blocs (12) qui est raccordé à chacun des blocs de tube de vaporisation (11) et distribue le gaz liquéfié basse température à chacun des blocs de tube de vaporisation (11) ;
un tube de collecte entre les blocs (14) qui est raccordé à chacun des blocs de tube de vaporisation (11) et collecte et envoie le gaz liquéfié basse température vaporisé dans le bloc de tube de vaporisation (11) ; et
une unité de suppression de pulsation entre les blocs qui supprime la propagation de pulsation de pression entre les blocs de tube de vaporisation (11) mutuellement raccordés par le tube de distribution entre les blocs (12) et le tube de collecte entre les blocs (14),
dans lequel :
l'unité de suppression de pulsation entre les blocs a une valve de marche - arrêt (41), qui est prévue dans le tube de collecte entre les blocs (14),
**caractérisé en ce que** la valve de marche - arrêt (41) ouvre et ferme la trajectoire d'écoulement du gaz liquéfié basse température vaporisé d'un bloc de tube de vaporisation (11) spécifique dans le tube de collecte entre les blocs (14), dans lequel l'unité de suppression de pulsation entre les blocs comprend en outre un tube de dérivation (42), qui dérive la valve de marche - arrêt (41) par rapport au bloc de tube de vaporisation spécifique (11) et forme une trajectoire d'écoulement du gaz liquéfié basse température vaporisé qui fusionne avec le tube de collecte entre les blocs (14) en aval de la valve de marche - arrêt (41), et
le tube de dérivation (42) est prévu avec un diaphragme de dérivation (43) qui réduit localement une surface transversale de la trajectoire d'écoulement du gaz liquéfié basse température formée dans le tube.

9. Vaporisateur pour gaz liquéfié basse température comprenant :
une pluralité de blocs de tube de vaporisation (11) ayant chacun une pluralité de panneaux de tubes de vaporisation (16) dans lesquels une pluralité de tubes de vaporisation (21) pour vaporiser un gaz liquéfié basse température s'écoulant à travers ces derniers en échangeant la chaleur avec l'extérieur, est agencée dans un plan vertical, chacun des panneaux de tubes de vaporisation (16) étant agencé dans une direction perpendiculaire au plan vertical ;
un tube de distribution entre les blocs (12) qui est raccordé à chacun des blocs de tube de vaporisation (11) et distribue le gaz liquéfié basse température à chacun des blocs de tube de vaporisation (11) ;
un tube de collecte entre les blocs (14) qui est raccordé à chacun des blocs de tube de vaporisation (11) et collecte et envoie le gaz liquéfié basse température vaporisé dans le bloc de tube de vaporisation (11) ; et
une unité de suppression de pulsation entre les blocs qui supprime la propagation de pulsation de pression entre les blocs de tube de vaporisation (11) mutuellement raccordés par le tube de distribution entre les blocs (12) et le tube de collecte entre les blocs (14), dans lequel :
chacun des blocs de tube de vaporisation (11) est prévu avec un tube de collecte entre les panneaux (19) qui est raccordé à chacun des panneaux de tubes de vaporisation (16) contenus dans le bloc de tube de vaporisation (11) et est raccordé au tube de collecte entre les blocs (14) et collecte le gaz liquéfié vaporisé dans chacun des panneaux de tubes de vaporisation (16) et envoie le gaz au tube de collecte entre les blocs (14),
dans lequel :
l'unité de suppression de pulsation entre les blocs a une valve de marche - arrêt (45), qui est prévue dans le tube de collecte entre les blocs (14),
**caractérisé en ce que** la valve de marche - arrêt (45) ouvre et ferme la trajectoire d'écoulement du gaz liquéfié basse température vaporisé d'un bloc de tube de vaporisation spécifique (11) dans le tube de collecte entre les blocs (14), dans lequel l'unité de suppression de pulsation entre les blocs comprend en outre un tube d'interconnexion du côté de la distribution (44) qui raccorde le tube de collecte entre les panneaux (19) du bloc de tube de vaporisation (11) spécifique avec le tube de collecte entre les panneaux (19) d'un autre bloc de tube de vaporisation (11), et
le tube d'interconnexion du côté de la distribution (44) est prévu avec un diaphragme de tube d'interconnexion du côté de la distribution (46) qui réduit localement une surface transversale de la trajectoire d'écoulement du gaz liquéfié basse température formée dans le tube.
